# EUROPEAN PATENT APPLICATION

(11) **EP 4 763 552 A1**
(43) Date of publication of application: **24.06.2026**
(21) Application number: 25744678.1
(22) Date of filing: 23.01.2025
(51) Int. Cl.: B60H 1/32, B60H 1/00

(54) **VEHICLE COOLING MODE SWITCHING METHOD AND APPARATUS, DEVICE AND READABLE STORAGE MEDIUM**

(30) Priority: 23.01.2024 CN 202410092823; 04.02.2024 CN 202410159414; 04.02.2024 CN 202410159078
(71) Applicant: ZHEJIANG ZEEKR INTELLIGENT TECHNOLOGY CO., LTD., Ningbo, Zhejiang 315899 (CN); Zhejiang Geely Holding Group Co., Ltd., Hangzhou, Zhejiang 310000 (CN)
(72) Inventor: LI, Shuangqi, Ningbo, Zhejiang 315899 (CN); LI, Shanshan, Ningbo, Zhejiang 315899 (CN)
(74) Representative: Elzaburu S.L.P.
(86) International application number: PCT/CN2025/074277
(87) International publication number: WO 2025/157215

(57) **Abstract**

A method for switching a vehicle cooling mode, an apparatus, a device and a readable storage medium. The method for switching the vehicle cooling mode includes: in response to a cooling mode switching instruction, detecting a pressure state of a high pressure side of the refrigerant in a vehicle cooling system and/or an attempt execution result of the cooling mode switching instruction; determining a switching timing based on the pressure state and/or the attempt execution result, and executing the cooling mode switching instruction based on the switching timing. The method for switching the vehicle cooling mode can ensure the normal on-off of a thermal expansion valve, thereby implementing a corresponding cooling function. The present application also provides a method for controlling a vehicle cooling, a device and a readable storage medium; and a method for controlling an air heater in a vehicle, an apparatus, a device and a storage medium.

## Description

### CROSS-REFERENCE TO RELATED APPLICATIONS

The present application claims priority to Chinese Patent Applications No. 202410159414.2 and No. 202410159078.1, both filed on February 4, 2024; and No. 202410092823.5, filed on January 23, 2024. The disclosures of the above-mentioned applications are incorporated herein by reference in their entireties.

### TECHNICAL FIELD

The present application relates to the technical field of vehicle, and in particular to a method for switching a vehicle cooling mode, an apparatus, a device, and readable storage medium.

### BACKGROUND

Currently, electric vehicle cooling scenarios include both passenger compartment and battery cooling. In cooling systems, the cooling source switches for the passenger compartment and battery are typically thermal expansion switches. When selecting a thermal expansion valve, the pressure threshold is typically higher than the operating pressure of the cooling system to ensure that the thermal expansion valve can respond to on/off instructions and complete the on/off operation. However, in actual applications, due to unforeseen circumstances, the thermal expansion valve may not open or close properly when the operating pressure of the cooling system is high, thus preventing the corresponding cooling function from being implemented.

### SUMMARY

The main purpose of the present application is to provide a method for switching a vehicle cooling mode, an apparatus, a device, and a readable storage medium, aiming to solve the technical problem that when the working pressure of the cooling system is high, the thermal expansion valve may not be able to switch normally due to some unexpected reasons, thereby making the corresponding cooling function unable to be realized.

The present application provides a method for switching a vehicle cooling mode, including:
in response to a cooling mode switching instruction, detecting a pressure state on a high pressure side of a refrigerant in a vehicle cooling system and/or an attempted execution result of the cooling mode switching instruction; and
determining a switching timing based on the pressure state and/or the attempted execution result, and executing the cooling mode switching instruction based on the switching timing.

The present application also provides an apparatus for switching a vehicle cooling mode, including:
a detection module, configured to detect, in response to a cooling mode switching instruction, a pressure state of a high pressure side of a refrigerant in a vehicle cooling system and/or an attempted execution result of the cooling mode switching instruction; and
a switching module, configured to determine a switching timing based on the pressure state and/or the attempted execution result, and execute the cooling mode switching instruction based on the switching timing.

The present application also provides a device for switching a vehicle cooling mode, including: a memory, a processor, and a vehicle cooling mode switching program stored in the memory and executable on the processor; when the vehicle cooling mode switching program is executed by the processor, the steps of the method for switching the vehicle cooling mode are implemented.

The present application also provides a readable storage medium, a vehicle cooling mode switching program is stored on the readable storage medium; when the vehicle cooling mode switching program is executed by a processor, the steps of the method for switching the vehicle cooling mode are implemented.

The present application also provides a method for controlling a vehicle cooling; the vehicle includes a first cooling object and a second cooling object, and the method for controlling the vehicle cooling includes:
determining a cooling priority between the first cooling object and the second cooling object; and
controlling a temperature of the first cooling object and/or the second cooling object based on the cooling priority.

The present application also provides a device for controlling a vehicle cooling, including: a memory, a processor, and a vehicle cooling control program stored in the memory and executable on the processor; when the vehicle cooling control program is executed by the processor, the steps of the method for controlling the vehicle cooling are implemented.

The present application provides a readable storage medium; the readable storage medium is a computer-readable storage medium, and a vehicle cooling control program is stored on the readable storage medium; when the vehicle cooling control program is executed by a processor, the steps of the method for controlling the vehicle cooling are implemented.

The present application also provides a method for controlling an air heater in a vehicle, including:
in a first control mode, adjusting a damper opening of a target air duct based on a preset control strategy;
determining an actual air outlet temperature based on a temperature measurement value of a temperature sensor in the target air duct;
determining a temperature difference between the actual air outlet temperature and a target air outlet temperature; and
controlling a power of the air heater according to the temperature difference.

The present application also provides an apparatus for controlling an air heater in a vehicle, including:
an adjustment module, configured to adjust a damper opening of a target air duct based on a preset control strategy in a first control mode;
a determination module, configured to determine an actual air outlet temperature based on a temperature measurement value of a temperature sensor in the target air duct, and further configured to determine a temperature difference between the actual air outlet temperature and a target air outlet temperature; and
a control module, configured to control a power of the air heater according to the temperature difference.

The present application also provides a device for controlling an air heater in a vehicle, including: a memory, a processor, and an air heater control program in the vehicle stored in the memory and executable on the processor; the air heater control program in the vehicle is configured to implement the steps of the method for controlling the air heater in the vehicle.

The present application also provides a storage medium; an air heater control program in the vehicle is stored on the storage medium, and when the air heater control program in the vehicle is executed by a processor, the steps of the method for controlling the air heater in the vehicle are implemented.

### BRIEF DESCRIPTION OF THE DRAWINGS

FIG. 1 is a schematic diagram of a device structure of a hardware operating environment according to an embodiment of the present application.
FIG. 2 is a schematic diagram of a cooling system in a method for switching a vehicle cooling mode of the present application.
FIG. 3 is a flow chart of the method for switching the vehicle cooling mode according to a first embodiment of the present application.
FIG. 4 is a flow chart of the method for switching the vehicle cooling mode according to a second embodiment of the present application.
FIG. 5 is a flow chart of the method for switching the vehicle cooling mode according to a third embodiment of the present application.
FIG. 6 is a schematic structural diagram of a device for switching the vehicle cooling mode in the method for switching the vehicle cooling mode of the present application.
FIG. 7 is a schematic diagram of the device structure of the hardware operating environment according to an embodiment of the present application.
FIG. 8 is a flow chart of the method for controlling the vehicle cooling according to a first embodiment of the present application.
FIG. 9 is a flow chart of the method for controlling the vehicle cooling according to a second embodiment of the present application.
FIG. 10 is a flow chart of the method for controlling the vehicle cooling according to a third embodiment of the present application.
FIG. 11 is a schematic structural diagram of a device for controlling an air heater in a vehicle in a hardware operating environment according to an embodiment of the present application.
FIG. 12 is a flow chart of a method for controlling the air heater in the vehicle according to a first embodiment of the present application.
FIG. 13 is a schematic diagram of the interior of the rear air-conditioning box in the face-blowing mode in the method for controlling the air heater in the vehicle according to the first embodiment of the present application.
FIG. 14 is a schematic diagram of the interior of the rear air-conditioning box in the foot-blowing mode in the method for controlling the air heater in the vehicle according to the first embodiment of the present application.
FIG. 15 is a schematic diagram of the interior of the rear air-conditioning box in the face-blowing-foot-blowing mode in the method for controlling the air heater in the vehicle according to the first embodiment of the present application.
FIG. 16 is a schematic diagram showing the opening of the rear air-conditioning box's face-blowing damper in the foot-blowing mode in the method for controlling the air heater in the vehicle according to the first embodiment of the present application.
FIG. 17 is a flow chart of the method for controlling the air heater in the vehicle according to the second embodiment of the present application.
FIG. 18 is a structural block diagram of the device for controlling the air heater in the vehicle according to the first embodiment of the present application.

The realization of the objectives, functional features and advantages of the present application will be further explained in conjunction with embodiments and with reference to the accompanying drawings.

### DETAILED DESCRIPTION OF THE EMBODIMENTS

It should be understood that the specific embodiments described herein are only used to explain the present application and are not intended to limit the present application.

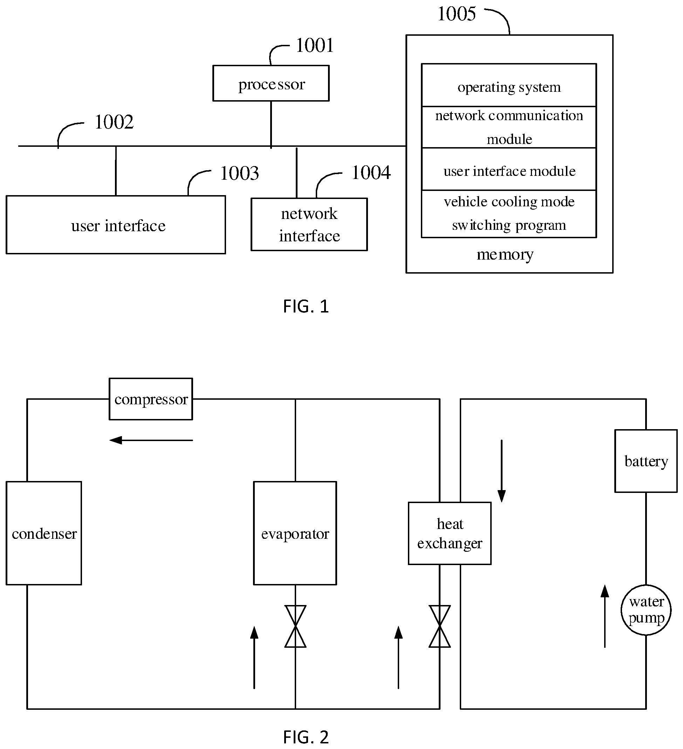

As shown in FIG. 1, FIG. 1 is a schematic diagram of the device structure of the hardware operating environment involved in the embodiment of the present application.

The device in the embodiment of the present application can be an electronic terminal device such as a vehicle, a PC, a smart phone, a tablet computer, a portable computer, etc.

As shown in FIG. 1, the device may include: a processor 1001, such as a CPU, a network interface 1004, a user interface 1003, a memory 1005, and a communication bus 1002. Among them, the communication bus 1002 is configured to realize the connection and communication between these components. The user interface 1003 may include a display, an input unit such as a keyboard, and the user interface 1003 may also include a standard wired interface and a wireless interface. The network interface 1004 may include a standard wired interface and a wireless interface (such as a Wi-Fi interface). The memory 1005 may be a high-speed RAM memory or a stable memory (non-volatile memory), such as a disk memory. The memory 1005 may also be a storage device independent of the aforementioned processor 1001.

In an embodiment, the device may also include a camera, a radio frequency circuit, a sensor, an audio circuit, a WiFi module, and the like. Among them, the sensors include light sensors, motion sensors, and other sensors. Specifically, the light sensor may include an ambient light sensor and a proximity sensor; the ambient light sensor may adjust the brightness of the display screen according to the brightness of the ambient light, and the proximity sensor may turn off the display screen and/or backlight when the mobile terminal is moved to the ear. As a type of motion sensor, the gravity acceleration sensor can detect the magnitude of acceleration in all directions (generally three axes), and can detect the magnitude and direction of gravity when stationary. It can be used for applications that identify the posture of the mobile terminal (such as horizontal and vertical screen switching, related games, magnetometer posture calibration), vibration recognition related functions (such as pedometer, tapping), etc.; of course, the mobile terminal may also be equipped with other sensors such as gyroscopes, barometers, hygrometers, thermometers, infrared sensors, etc., which will not be repeated here.

Those skilled in the art will understand that the device structure shown in FIG. 1 does not constitute a limitation on the device, and may include more or fewer components than shown, or a combination of certain components, or a different arrangement of components.

As shown in FIG. 1, the memory 1005 as a computer storage medium may include an operating system, a network communication module, a user interface module, and a vehicle cooling mode switching program.

In the device shown in FIG. 1, the network interface 1004 is primarily configured to connect to a backend server and perform data communication with the backend server; the user interface 1003 is primarily configured to connect to a client (user end) and perform data communication with the client; and the processor 1001 can be configured to call a vehicle cooling mode switching program stored in the memory 1005 and perform the following operations:

In response to a cooling mode switching instruction, detecting a pressure state on a high pressure side of a refrigerant in a vehicle cooling system and/or an attempted execution result of the cooling mode switching instruction;

A switching timing is determined based on the pressure state and/or the attempted execution result, and the cooling mode switching instruction is executed based on the switching timing.

In an embodiment, the processor 1001 may call the vehicle cooling mode switching program stored in the memory 1005 and further perform the following operations:

The steps of determining a switching timing based on the pressure state and executing the cooling mode switching instruction based on the switching timing include:

After detecting that the pressure state is a preset low pressure state, the cooling mode switching instruction is executed.

In an embodiment, the processor 1001 may call the vehicle cooling mode switching program stored in the memory 1005 and further perform the following operations:
The steps of determining a switching timing based on the pressure state and the attempted execution result, and executing the cooling mode switching instruction based on the switching timing include:
If the pressure state is determined to be a preset high pressure state, attempting to execute the cooling mode switching instruction and monitoring system parameters related to the cooling mode switching instruction in the vehicle cooling system;
If the system parameters do not undergo a preset change, the attempted execution result is determined to be an attempted execution failure, and after executing the reset action of the cooling mode switching instruction, the step of executing the cooling mode switching instruction after detecting that the pressure state is a preset low pressure state is executed.

In an embodiment, the vehicle includes a first cooling object and a second cooling object, and the refrigerant participates in heat exchange in a cooling loop of the vehicle cooling system. The cooling loop includes a compressor, an evaporator, and a heat exchanger. The evaporator is used for refrigerating the first cooling object, and the refrigerant enters the evaporator through a first expansion valve. The heat exchanger is used for refrigerating the second cooling object. The refrigerant enters the heat exchanger through a second expansion valve. In the heat exchanger, the refrigerant exchanges heat with the heat exchange medium corresponding to the second cooling object, and the heat exchange medium is driven by a water pump.

In an embodiment, the processor 1001 may call the vehicle cooling mode switching program stored in the memory 1005 and further perform the following operations:
The mode switching type corresponding to the cooling mode switching instruction is switching from a single-cooling mode of the first cooling object to a dual-cooling mode, and the system parameter is the air outlet temperature of the evaporator and/or the pressure on the high pressure side of the refrigerant;
The step of attempting to execute the cooling mode switching instruction and monitoring system parameters related to the cooling mode switching instruction in the vehicle cooling system includes:
   Maintaining the current power of the compressor, starting the water pump and continuing for a first preset time, and then executing an action of opening the second expansion valve;
   If, after executing the action of opening the second expansion valve and waiting for the second preset time, the change in the air outlet temperature is less than the preset first change threshold, and/or the change in the pressure is less than the second change threshold, it is determined that the system parameter has not undergone the preset change.

In an embodiment, the processor 1001 may call the vehicle cooling mode switching program stored in the memory 1005 and further perform the following operations:
The mode switching type corresponding to the cooling mode switching instruction is switching from the single-cooling mode of the second cooling object to the dual-cooling mode, and the system parameter is the medium temperature of the heat exchange medium and/or the pressure on the high pressure side of the refrigerant;
The step of attempting to execute the cooling mode switching instruction and monitoring system parameters related to the cooling mode switching instruction in the vehicle cooling system includes:
   Maintaining the current power of the compressor and executing the action of opening the first expansion valve;
   If, after executing the action of opening the first expansion valve and waiting for the second preset time, the change in the medium temperature is less than the preset third change threshold, and/or the change in the pressure is less than the second change threshold, it is determined that the system parameter has not undergone the preset change.

In an embodiment, the processor 1001 may call the vehicle cooling mode switching program stored in the memory 1005 and further perform the following operations:
The step of executing the cooling mode switching instruction includes:
Based on the requested power of the compressor in the vehicle cooling system and the compensation value of the cooling object before executing the cooling mode switching instruction, an initial value of a control algorithm for controlling the compressor is determined, and the power of the compressor is controlled based on the control algorithm.

It should be noted that, with reference to FIG. 2, there is a schematic diagram of the vehicle cooling system used in the method for switching the vehicle cooling mode of the present application. As shown in FIG. 2, the vehicle cooling system pipeline includes a compressor, a condenser, an evaporator, a heat exchanger, and a water pump. The arrows in the figure indicate the flow direction of the medium in the pipeline. The evaporator is configured to cool the vehicle passenger compartment, while the heat exchanger is configured to cool the battery. Valves are provided at the inlet of each evaporator and heat exchanger to restrict the flow of the medium (refrigerant) in the pipeline. For example, if only the evaporator is required to cool the passenger compartment, the valve at the evaporator inlet is kept open and the inlet valve of the heat exchanger is closed. Conversely, if only the heat exchanger is required to cool the battery, the inlet valve of the heat exchanger is kept open and the inlet valve of the evaporator is closed. Typically, the inlet valve is a thermal expansion valve. When the compressor is operating, the high pressure of the refrigerant generally does not exceed 28 bar. Therefore, when selecting a thermal expansion valve, a thermal expansion valve with a normal switching threshold greater than 28 bar is selected. However, in actual applications, the thermal expansion valve may fail to meet quality standards or age, causing the pressure threshold for normal opening and closing to drop. Consequently, when the refrigerant's high pressure is high, the thermal expansion valve may not respond to opening and closing instructions properly. To address this issue, the present application proposes a method for switching the vehicle cooling mode that determines the switching timing of cooling mode (valve opening and closing timing) to ensure that the thermal expansion valve can respond to opening and closing instructions properly and complete the opening and closing action.

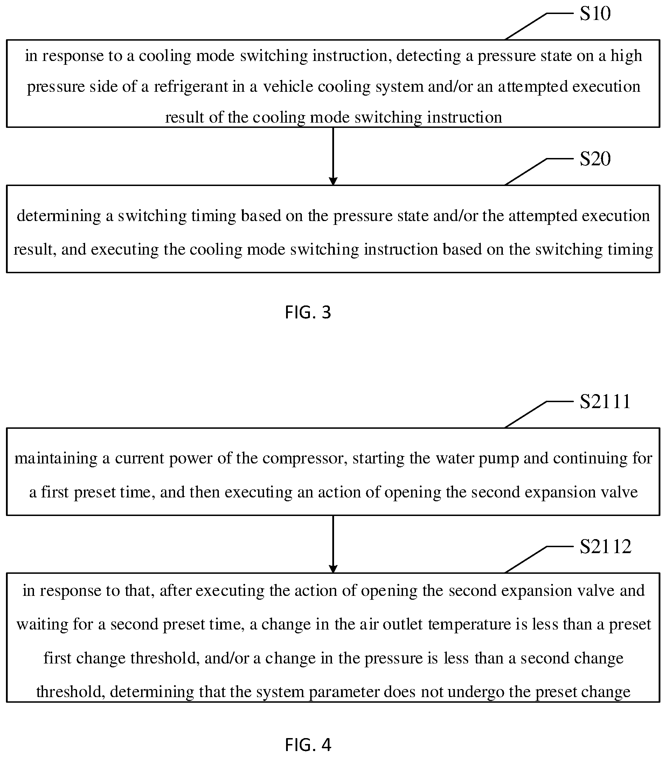

With reference to FIG. 3, which is a first embodiment of a method for switching the vehicle cooling mode of the present application, the method for switching the vehicle cooling mode includes:
Step S10, in response to a cooling mode switching instruction, detecting a pressure state of a high pressure side of a refrigerant in a vehicle cooling system and/or an attempted execution result of the cooling mode switching instruction;
It should be noted that the above-mentioned vehicle cooling mode switching instruction usually refers to the vehicle switching from non-cooling mode to cooling mode, or switching the cooling mode type; the vehicle includes a first cooling object (i.e., the vehicle's passenger compartment) and a second cooling object (i.e., the vehicle's battery); the vehicle's cooling mode type may include a single-cooling mode for the passenger compartment, a single-cooling mode for the battery, and a dual-cooling mode including passenger compartment cooling and battery cooling; the type of switching the cooling mode includes switching from a single-cooling mode for the passenger compartment to a dual-cooling mode, thereby switching from a single-cooling mode for the battery to a dual-cooling mode.

Exemplarily, when a user triggers a cooling mode switching instruction, or when the vehicle itself triggers and generates a cooling mode switching instruction, correspondingly, the vehicle or vehicle controller will respond to the cooling mode switching instruction, and detect the pressure state of the high pressure side of the refrigerant in the vehicle cooling system and/or the attempted execution result of the cooling mode switching instruction. The pressure of the high pressure side of the refrigerant is the pressure of the refrigerant after being compressed by the compressor, i.e., the pressure at the compressor outlet. The pressure state can include a preset high pressure state and a preset low pressure state. For example, the actual pressure on the high pressure side is compared with a preset pressure threshold. If the actual pressure is greater than or equal to the preset pressure threshold, the pressure state of the high pressure side is considered to be the preset high pressure state. If the actual pressure is less than the preset pressure threshold, the pressure state of the high pressure side is considered to be the preset low pressure state. In an embodiment, after receiving the cooling mode switching instruction, the vehicle may attempt to execute the cooling mode switching instruction. The attempted execution result indicates whether the attempted execution of the cooling mode switching instruction is successful.

Step S20, determining a switching timing based on the pressure state and/or the attempted execution result, and executing the cooling mode switching instruction based on the switching timing.

For example, the switching timing can be determined solely based on the pressure state, solely based on the attempted execution result, or in combination with the pressure state and the attempted execution result. The switching timing also determines when to open the thermal expansion valve in the cooling system. The thermal expansion valve is then opened at the corresponding switching timing to complete the cooling mode switch. For example, in the case where the switching timing is determined solely based on the pressure state, the switching timing can be determined when the pressure state is detected to be a preset low pressure state. In the case where the switching timing is determined solely based on the attempted execution result, after receiving the cooling mode switching instruction, the cooling mode switching instruction can be attempted, and then the attempted execution result of the cooling mode switching instruction can be detected. If the system parameters related to the switching instruction change, the attempted switch can be considered successful. If not, the attempted switch can be considered unsuccessful. Accordingly, in the event of a failed switch attempt, the power of the compressor in the vehicle cooling system can be reduced and maintained for a period of time, and then the cooling mode switching instruction can be attempted again until the attempt is successful. In an embodiment, in cases where the switching timing is determined based on the pressure state and the attempted execution result, the pressure state may be first detected. If the pressure state is a preset low pressure state, the switch may be made directly. If the pressure state is a preset high pressure state, the switching timing may be determined based on the attempted execution result. It will be appreciated that this embodiment determines the switching timing based on the pressure state on the high pressure side of the refrigerant and/or the attempted execution result, and executes the cooling mode switching instruction at the determined switching timing, thereby ensuring that the cooling mode switching instruction is successfully executed, that is, ensuring that the thermal expansion valve can complete the opening and closing action, thereby improving the stability of the vehicle cooling system's cooling function.

In this embodiment, the vehicle, in response to a cooling mode switching instruction, detects the pressure state on the high pressure side of the refrigerant in the vehicle cooling system and/or the an attempted execution result of the cooling mode switching instruction. Based on the pressure state and/or the attempted execution result, the vehicle determines a switch timing and executes the cooling mode switching instruction based on the switch timing. In other words, in this embodiment, the vehicle determines the switch timing based on the pressure state on the high pressure side of the refrigerant and/or the attempted execution result, and executes the corresponding cooling mode switching instruction. This ensures a successful cooling mode switch, i.e., ensures that the thermal expansion valve completes its opening and closing action, thereby improving the stability of cooling function of the vehicle cooling system.

In a feasible implementation manner, the steps of determining a switching timing based on the pressure state and executing the cooling mode switching instruction based on the switching timing include:
Step S201, after detecting that the pressure state is a preset low pressure state, executing the cooling mode switching instruction.

It should be noted that the pressure state can be divided into a preset high pressure state and a preset low pressure state. In actual application, if the actual pressure on the high pressure side of the refrigerant is greater than or equal to a preset pressure threshold (e.g., 20 bar), the pressure state can be determined to be the preset high pressure state. Conversely, if the actual pressure on the high pressure side of the refrigerant is less than the preset pressure threshold, the pressure state can be determined to be the preset low pressure state.

For example, after receiving a cooling mode switching instruction, the vehicle may first detect the pressure state of the high pressure side of the refrigerant in the vehicle cooling system. If the pressure state is a preset low pressure state, the cooling mode switching instruction may be directly executed. If the detected pressure state is a preset high pressure state, the vehicle waits for the pressure state to change from the high pressure state to the preset low pressure state (if the compressor in the vehicle cooling system is in the started state, the compressor power may be reduced or stopped during the waiting period, and the compressor operating condition may be restored after the switching timing is determined) before executing the corresponding cooling mode switching instruction.

In a feasible implementation manner, the steps of determining a switching timing based on the pressure state and the attempted execution result, and executing the cooling mode switching instruction based on the switching timing include:
Step S210, if the pressure state is determined to be a preset high pressure state, attempting to execute the cooling mode switching instruction and monitoring system parameters related to the cooling mode switching instruction in the vehicle cooling system;
Step S220, if the system parameters do not undergo the preset changes, the attempted execution result is determined to be an attempted execution failure, and after executing the reset action of the cooling mode switching instruction, the step of executing the cooling mode switching instruction after detecting that the pressure state is the preset low pressure state is executed.

For example, in the case where the switching timing is determined based on the pressure state and the attempted execution result, the vehicle may first detect the pressure state of the high pressure side of the refrigerant. If the pressure state is a preset low pressure state, the corresponding cooling mode switching instruction may be directly executed. Conversely, if the pressure state is a preset high pressure state, the cooling mode switching instruction may be attempted to be executed, and then the system parameters related to the cooling mode switching instruction in the vehicle cooling system may be monitored (it is worth noting that in the case of non-attempted execution, that is, the cooling mode switching instruction is directly executed after the preset low pressure state is determined, the system parameters may not be monitored). If the system parameters do not undergo a preset change (the preset change can be set by technicians based on actual conditions and will not be described in detail here), the attempted execution result may be determined to be an attempted execution failure, and then the reset action of the cooling mode switching instruction (such as closing the expansion valve) is executed. The step of executing the cooling mode switching instruction after detecting that the pressure state is the preset low pressure state is executed. If the system parameters undergo a preset change, the attempted execution result may be determined to be an attempted execution success, that is, the relevant expansion valve in the vehicle cooling system is successfully opened. Accordingly, the compressor in the vehicle cooling system may be controlled to start or increase power.

In a feasible embodiment, the vehicle includes a first cooling object and a second cooling object, and the refrigerant participates in heat exchange in a cooling loop of the vehicle cooling system. The cooling loop includes a compressor, an evaporator, and a heat exchanger. The evaporator is configured to refrigerate the first cooling object, and the refrigerant enters the evaporator through a first expansion valve. The heat exchanger is configured to refrigerate the second cooling object. The refrigerant enters the heat exchanger through a second expansion valve. In the heat exchanger, the refrigerant exchanges heat with the heat exchange medium corresponding to the second cooling object, and the heat exchange medium is driven by a water pump. Among them, the first cooling object can be the passenger compartment, and the second cooling object can be the battery. Similarly, based on FIG. 2, the refrigerant participates in heat exchange in the cooling loop of the vehicle cooling system, for example, absorbing heat at the evaporator, absorbing heat at the heat exchanger, etc. Correspondingly, the cooling loop includes parts such as a compressor, an evaporator, and a heat exchanger. Among them, the refrigerant enters the evaporator through the first expansion valve, evaporates at the evaporator and absorbs heat, thereby cooling the passenger compartment; and the refrigerant enters the heat exchanger through the second expansion valve, and exchanges heat with the heat exchange medium (which can be water) on the battery side at the heat exchanger to reduce the heat of the heat exchange medium, and the heat exchange medium cools the battery under the drive of the battery water pump (the water pump in FIG. 2).

In addition, the process of switching to the cooling mode may include the following scenarios: if the cooling mode is a single-cooling mode for the passenger compartment, the compressor is started when the first expansion valve is open and the second expansion valve is closed; if the cooling mode is a single-cooling mode for the battery, the compressor is started when the first expansion valve is closed, the second expansion valve is opened, and the battery water pump is started; if the cooling mode is a dual-cooling mode, the compressor is started when the first expansion valve is opened, the second expansion valve is opened, and the battery water pump is started.

For example, if the cooling mode is the single-cooling mode for the passenger compartment, i.e., when the vehicle switches from non-cooling mode to single-cooling mode for the passenger compartment, the compressor is activated when the first expansion valve is open and the second expansion valve is closed. For example, after determining that the pressure state is a preset low pressure state, if the first expansion valve is not open, the first expansion valve is opened; if the second expansion valve is open, the second expansion valve is closed. After the expansion valves have completed operation, the compressor is activated. If the cooling mode is the single-cooling mode for the battery, i.e., when the vehicle switches from the non-cooling mode to the single-cooling mode for the battery, the compressor is activated when the first expansion valve is closed, the second expansion valve is opened, and the battery water pump is activated. For example, after determining that the pressure state is a preset low pressure state, if the first expansion valve is open, the action of closing the first expansion valve is executed; if the second expansion valve is closed, the action of opening the second expansion valve is executed. The battery water pump is activated, and then the compressor is activated. If the cooling mode is dual-cooling mode, i.e., when the vehicle switches from non-cooling mode to dual-cooling mode, the compressor is activated when the first expansion valve and the second expansion valve are opened, and the battery water pump is activated. For example, after determining that the pressure state is a preset low pressure state, if the first expansion valve is not open, the action of opening the first expansion valve is executed; if the second expansion valve is not open, the action of opening the second expansion valve is executed; and the battery water pump is started before the compressor is started. It will be appreciated that in this embodiment, starting the compressor last avoids safety issues caused by excessive pipeline pressure due to starting the compressor when both expansion valves are not open.

With reference to FIG. 4, a second embodiment of the present application is proposed based on the first embodiment of the present application. The mode switching type corresponding to the cooling mode switching instruction is switching from the single-cooling mode of the first cooling object to the dual-cooling mode. The system parameters are the air outlet temperature of the evaporator and/or the pressure on the high pressure side of the refrigerant.

The step of attempting to execute the cooling mode switching instruction and monitoring system parameters related to the cooling mode switching instruction in the vehicle cooling system includes:
Step S2111, maintaining the current power of the compressor, starting the water pump and continuing for a first preset time, then executing the action of opening the second expansion valve;
Step S2112, if after executing the action of opening the second expansion valve and waiting for the second preset time, the change in the air outlet temperature is less than the preset first change threshold, and/or the change in the pressure is less than the second change threshold, it is determined that the system parameters have not undergone the preset changes.

Exemplarily, when the vehicle switches from a single-cooling mode for the first cooling object to a dual-cooling mode, that is, when the vehicle switches from a single-cooling mode for the passenger compartment to a dual-cooling mode, after detecting that the pressure state is a preset high pressure state, the cooling mode switching instruction is attempted to be executed. The attempted execution process includes: maintaining the current power of the compressor, starting the battery water pump and continuing for a first preset time, and then executing the action of opening the second expansion valve (this action is an attempted action). If, after executing the action of opening the second expansion valve and waiting for the second preset time, the change in the evaporator's air outlet temperature is less than the preset first change threshold, and/or the change in the pressure is less than the second change threshold, it is determined that the system parameter has not undergone a preset change. The corresponding second expansion valve is not successfully opened, otherwise, the second expansion valve is successfully opened. It is understandable that if the action of opening the second expansion valve is successful, due to the increase in the cooling load (that is, the refrigerant will flow through the evaporator and the heat exchanger in parallel), but the power of the compressor remains unchanged at this time, the relevant cooling performance of the evaporator will decrease, and the cooling performance is characterized by the air outlet temperature of the evaporator and the pressure change on the high pressure side of the refrigerant. For example, the air outlet temperature changes significantly (usually a temperature increase), or the pressure on the high pressure side of the refrigerant changes significantly (usually a pressure drop), that is, the change in the air outlet temperature of the evaporator is greater than or equal to the preset first change threshold (for example, 1°C), and/or the change in the pressure on the high pressure side of the refrigerant is greater than or equal to the second change threshold (for example, 1 bar), which also indicates that the second expansion valve is successfully opened under the preset high pressure state. Among them, the specific change conditions of the preset change can be set by technical personnel according to actual conditions and will not be repeated here.

It is understood that under the preset high pressure state, this embodiment first attempts to open the thermal expansion valve. It then uses the current cooling side temperature or pressure feedback to determine whether the thermal expansion valve has been successfully opened. If successful, the compressor is directly controlled to increase power. If unsuccessful, the compressor power is reduced. Once the pressure state changes from the preset high pressure state to the preset low pressure state, the thermal expansion valve is opened. Therefore, this embodiment, by attempting to open the thermal expansion valve, speeds up the cooling mode switching process while ensuring that the thermal expansion valve can be opened, thereby enhancing the passenger experience.

In this embodiment, when the preset pressure state is a preset low pressure state, the step of directly executing the cooling mode switching instruction may include: maintaining the current power of the compressor, activating the battery water pump, and continuing for a first preset time period, and then executing the action of opening the second expansion valve. That is, when the vehicle switches from single-cooling mode for the passenger compartment to dual-cooling mode, the vehicle is in single-cooling mode for the passenger compartment before the switch, i.e., the first expansion valve is open, and the compressor is operating; the second expansion valve is closed, and the battery water pump is off. Before switching, the pressure state of the high pressure side of the refrigerant is determined. If it is a preset low pressure state, there is no need to wait. The first expansion valve is maintained open, the power (or speed) of the compressor is maintained; the battery water pump is activated, and it operates for a period of time (i.e., the first preset time period, which can be set by technicians based on actual needs), and then the action of opening the second expansion valve is executed.

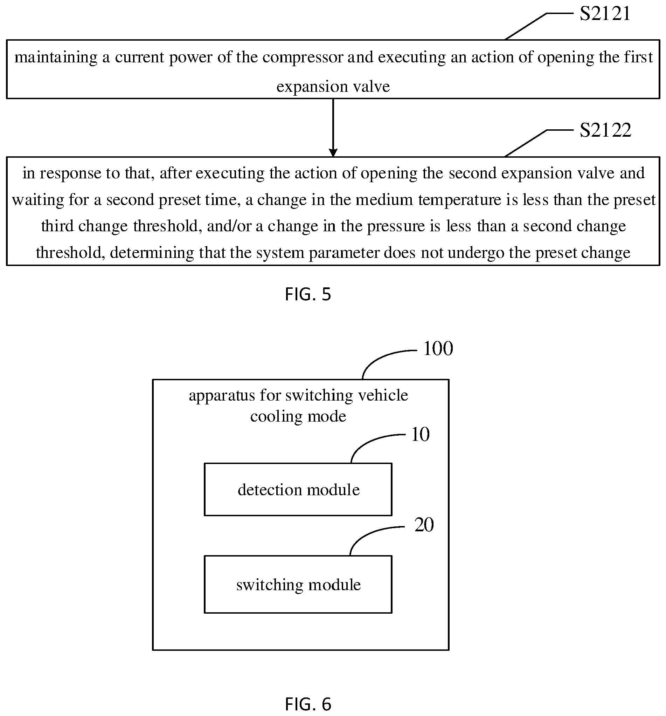

With reference to FIG. 5, a third embodiment of the present application is proposed based on the first and second embodiments of the present application. The mode switching type corresponding to the cooling mode switching instruction is switching from a single-cooling mode of the second cooling object to a dual-cooling mode. The system parameters are the medium temperature of the heat exchange medium and/or the pressure on the high pressure side of the refrigerant. The steps of attempting to execute the cooling mode switching instruction and monitoring the system parameters related to the cooling mode switching instruction in the vehicle cooling system include:
Step S2121, maintaining the current power of the compressor and executing the action of opening the first expansion valve;
Step S2122, if, after executing the action of opening the first expansion valve and waiting for the second preset time, the change in the medium temperature is less than the preset third change threshold, and/or the change in the pressure is less than the second change threshold, it is determined that the system parameter has not undergone the preset change.

For example, in a scenario where the vehicle switches from a single-cooling mode of the second cooling target to a dual-cooling mode, i.e., from a single-cooling mode of the battery to a dual-cooling mode; if the pressure is at a preset high pressure, the compressor's current power is maintained and the first expansion valve is opened. If, after opening the first expansion valve and waiting for a second preset time period (which can be set by technicians based on actual conditions), the change in medium temperature is less than a preset third change threshold, and/or the change in pressure is less than a second change threshold, it can be determined that the system parameters have not changed, indicating that the first expansion valve has not opened successfully. Conversely, if the heat exchange medium temperature changes significantly (typically by increasing) and/or the pressure of the high pressure side of the refrigerant changes significantly (typically by dropping), i.e., the heat exchange medium temperature change is greater than or equal to a preset third change threshold (e.g., 1°C), and/or the pressure change of the high pressure side of the refrigerant is greater than or equal to the second change threshold, indicating that the first expansion valve has opened successfully. The specific conditions for the preset changes can be set by technicians based on actual conditions and are not further described here.

In this embodiment, when the preset pressure state is a preset low pressure state, the step of directly executing the cooling mode switching instruction may include: maintaining the current power of the compressor and executing the action of opening the first expansion valve. Specifically, when the cooling mode is switched from single-cooling mode for the battery to dual-cooling mode, the vehicle is in single-cooling mode for the battery before the switch. This means that the cooling system is in the following state: the first expansion valve is closed, and the compressor is operating; the second expansion valve is open, and the battery water pump is activated. Prior to the switch, the refrigerant pressure state is determined. If the pressure state is the preset low pressure state, the current power of the compressor is maintained and the first expansion valve is opened.

In a feasible implementation manner, the step of executing the cooling mode switching instruction includes:
Step S01, determining an initial value of a control algorithm for controlling the compressor based on the requested power of the compressor in the vehicle cooling system and a compensation value of a cooling object before executing the cooling mode switching instruction, and controlling the power of the compressor based on the control algorithm.

It should be noted that switching from single-cooling to dual-cooling will increase the cooling load. Therefore, in order to ensure that the compressor can be smoothly controlled when switching modes, this embodiment will configure an initial value for the control algorithm for controlling the compressor after switching.

For example, let's consider the case where a vehicle switches from single-cooling mode (single-cooling mode of the passenger compartment) to dual-cooling mode. After the second expansion valve is opened, the initial power of the compressor is determined based on the requested compressor power before switching to dual-cooling mode and the battery compensation value. The requested compressor power before switching to dual-cooling mode is the compressor power calculated by the control algorithm before the switch. The control algorithm can be a proportional integral differential (PID) control algorithm, and the specific coefficients in the control algorithm can be configured by technicians based on actual needs. The battery compensation value is determined based on relevant battery parameters. For example, relevant battery parameters may include battery body temperature, battery outlet water temperature, and battery inlet target water temperature. Typically, the battery compensation value is proportional to the relevant battery temperature. The requested power and battery compensation value are then added together to obtain the initial value for the compressor control algorithm. The control algorithm then controls the compressor power based on this initial value. The same process can be applied to other switching scenarios and will not be further described here.

In addition, the embodiment of the present application further provides an apparatus for switching the vehicle cooling mode 100, which includes:
A detection module 10, configured for detecting, in response to a cooling mode switching instruction, a pressure state of a high pressure side of a refrigerant in a vehicle cooling system and/or an attempted execution result of the cooling mode switching instruction;
A switching module 20, configured to determine a switching timing based on the pressure state and/or the attempted execution result, and execute the cooling mode switching instruction based on the switching timing.

In an embodiment, the switching module 20 is further configured for:
After detecting that the pressure state is a preset low pressure state, executing the cooling mode switching instruction.

In an embodiment, the switching module 20 is further configured for:
If the pressure state is determined to be a preset high pressure state, attempting to execute the cooling mode switching instruction and monitoring system parameters related to the cooling mode switching instruction in the vehicle cooling system;
If the system parameters do not undergo a preset change, determining the attempted execution result to be an attempted execution failure, and after executing the reset action of the cooling mode switching instruction, executing the step of executing the cooling mode switching instruction after detecting that the pressure state is a preset low pressure state.

In an embodiment, the vehicle includes a first cooling object and a second cooling object, and the refrigerant participates in heat exchange in a cooling loop of the vehicle cooling system. The cooling loop includes a compressor, an evaporator, and a heat exchanger. The evaporator is configured to refrigerate the first cooling object, and the refrigerant enters the evaporator through a first expansion valve. The heat exchanger is configured to refrigerate the second cooling object. The refrigerant enters the heat exchanger through a second expansion valve. In the heat exchanger, the refrigerant exchanges heat with the heat exchange medium corresponding to the second cooling object, and the heat exchange medium is driven by a water pump.

In an embodiment, the mode switching type corresponding to the cooling mode switching instruction is switching from a single-cooling mode of the first cooling object to a dual-cooling mode, and the system parameter is the air outlet temperature of the evaporator and/or the pressure on the high pressure side of the refrigerant; the switching module 20 is further configured for:
Maintaining the current power of the compressor, starting the water pump and continuing for a first preset time, and then executing an action of opening the second expansion valve;
If, after executing the action of opening the second expansion valve and waiting for the second preset time, the change in the air outlet temperature is less than the preset first change threshold, and/or the change in the pressure is less than the second change threshold, determining that the system parameter has not undergone the preset change.

In an embodiment, the mode switching type corresponding to the cooling mode switching instruction is switching from a single-cooling mode of the second cooling object to a dual-cooling mode, and the system parameter is the medium temperature of the heat exchange medium and/or the pressure on the high pressure side of the refrigerant; the switching module 20 is further configured for:
Maintaining the current power of the compressor and executing the action of opening the first expansion valve;
If, after executing the action of opening the first expansion valve and waiting for the second preset time, the change in the medium temperature is less than the preset third change threshold, and/or the change in the pressure is less than the second change threshold, determining that the system parameter has not undergone the preset change.

In an embodiment, the switching module 20 is further configured for:
Based on the requested power of the compressor in the vehicle cooling system and the compensation value of the cooling object before executing the cooling mode switching instruction, determining an initial value of a control algorithm for controlling the compressor, and controlling the power of the compressor based on the control algorithm.

The apparatus for switching the vehicle cooling mode provided in the present application utilizes the method for switching the vehicle cooling mode described in the aforementioned embodiments, aiming to address the technical issue of a thermal expansion valve failing to open and close properly due to unforeseen reasons when the cooling system's operating pressure is high, thereby preventing the corresponding cooling function from being realized. Compared to the related art, the beneficial effects of the apparatus for switching the vehicle cooling mode provided in the embodiments of the present application are the same as those of the method for switching the vehicle cooling mode described in the aforementioned embodiments. Other technical features of the apparatus for switching the vehicle cooling mode are the same as those disclosed in the aforementioned embodiments and are not further detailed here.

In addition, an embodiment of the present application also proposes a device for switching the vehicle cooling mode, which includes: a memory, a processor, and a vehicle cooling mode switching program stored on the memory and runnable on the processor. When the vehicle cooling mode switching program is executed by the processor, the steps of the method for switching the vehicle cooling mode as described above are implemented.

The specific implementation of the device for switching the vehicle cooling mode of the present application is basically the same as the various embodiments of the above-mentioned method for switching the vehicle cooling mode, and will not be repeated here.

In addition, an embodiment of the present application further proposes a readable storage medium, on which a vehicle cooling mode switching program is stored. When the vehicle cooling mode switching program is executed by a processor, the steps of the method for switching the vehicle cooling mode as described above are implemented.

The specific implementation of the medium of the present application is basically the same as the embodiments of the above-mentioned method for switching the vehicle cooling mode, and will not be repeated here.

Compared to traditional gasoline vehicles, electric vehicles must regulate not only the passenger compartment temperature but also the battery temperature to keep it in optimal working condition. Electric vehicle cooling can be simply divided into three scenarios: passenger compartment cooling alone, battery cooling alone, and dual-cooling of the passenger compartment and battery. For the dual-cooling scenario of the passenger compartment and battery, there are multiple control targets. Traditional control schemes for dual-cooling scenarios refer to each control target for temperature control. Based on the performance of traditional control schemes in actual applications, the temperature control stability is relatively poor. During the control process, the temperature of the passenger compartment and the battery fluctuates for a long time with a large amplitude, which affects the user's riding experience.

The main purpose of the present application is to provide a virtualization method, which aims to solve the technical problem that the traditional cooling solution has poor stability, causing the temperature of the passenger compartment and the battery to fluctuate at a high amplitude for a long time.

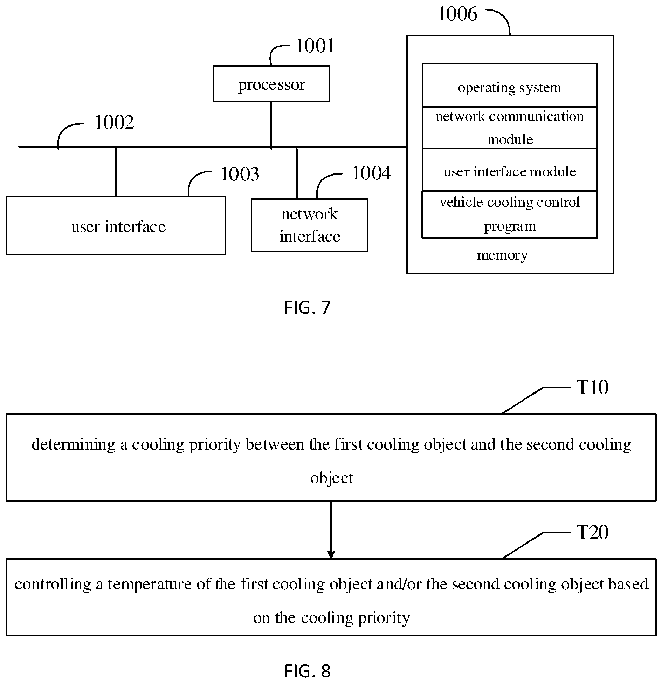

As shown in FIG. 7, FIG. 7 is a schematic diagram of the device structure of the hardware operating environment involved in the embodiment of the present application.

The device in the embodiment of the present application can be an electronic terminal device such as a vehicle, a PC, a smart phone, a tablet computer, a portable computer, etc.

As shown in FIG. 7, the device may include: a processor 1001, such as a CPU, a network interface 1004, a user interface 1003, a memory 1006, and a communication bus 1002. Among them, the communication bus 1002 is configured to realize the connection and communication between these components. The user interface 1003 may include a display, an input unit such as a keyboard, and the user interface 1003 may also include a standard wired interface and a wireless interface. The network interface 1004 may include a standard wired interface and a wireless interface (such as a Wi-Fi interface). The memory 1006 may be a high-speed RAM memory or a stable memory (non-volatile memory), such as a disk memory. The memory 1006 may also be a storage device independent of the aforementioned processor 1001.

In an embodiment, the device may also include a camera, a radio frequency (RF) circuit, a sensor, an audio circuit, a WiFi module, and the like. Among them, the sensors include light sensors, motion sensors, and other sensors. Specifically, the light sensor may include an ambient light sensor and a proximity sensor; the ambient light sensor may adjust the brightness of the display screen according to the brightness of the ambient light, and the proximity sensor may turn off the display screen and/or backlight when the mobile terminal is moved to the ear. As a type of motion sensor, the gravity acceleration sensor can detect the magnitude of acceleration in all directions (generally three axes), and can detect the magnitude and direction of gravity when stationary. It can be used for applications that identify the posture of the mobile terminal (such as horizontal and vertical screen switching, related games, magnetometer posture calibration), vibration recognition related functions (such as pedometer, tapping), etc.; of course, the mobile terminal may also be equipped with other sensors such as gyroscopes, barometers, hygrometers, thermometers, infrared sensors, etc., which will not be repeated here.

Those skilled in the art will understand that the device structure shown in FIG. 7 does not constitute a limitation on the device, and may include more or fewer components than shown, or a combination of certain components, or a different arrangement of components.

As shown in FIG. 7, the memory 1006 as a computer storage medium may include an operating system, a network communication module, a user interface module, and a vehicle cooling control program.

In the device shown in FIG. 7, the network interface 1004 is primarily configured to connect to a backend server and perform data communication with the backend server; the user interface 1003 is primarily configured to connect to a client (user end) and perform data communication with the client; and the processor 1001 can be configured to call a vehicle cooling control program stored in the memory 1006; the vehicle cooling includes passenger compartment cooling and battery cooling, and perform the following operations:
The vehicle includes a first cooling object and a second cooling object;
The cooling priority between the first cooling object and the second cooling object is determined;
The temperature of the first cooling object and/or the second cooling object is controlled based on the cooling priority.

In an embodiment, the processor 1001 may call the vehicle cooling control program stored in the memory 1006 and perform the following operations:
The temperatures of the first cooling object and the second cooling object are controlled by the vehicle's temperature control system. The temperature control loop of the temperature control system includes a compressor, an evaporator, and a heat exchanger. The evaporator is configured to cool the first cooling object, and the heat exchanger is configured to cool the second cooling object. In the heat exchanger, a first heat exchange medium of the temperature control loop exchanges heat with a second heat exchange medium corresponding to the second cooling object. The step of controlling the temperature of the first cooling object and/or the second cooling object based on the cooling priority includes:
The one with a higher cooling priority between the first cooling object and the second cooling object is selected as a control target;
When the control target is the first cooling object, controlling the air outlet temperature of the evaporator by adjusting the power of the compressor;
When the control target is the second cooling object, controlling the medium temperature of the second heat exchange medium by adjusting the power of the compressor.

In an embodiment, the processor 1001 may call the vehicle cooling control program stored in the memory 1006 and perform the following operations:
The step of controlling the air outlet temperature of the evaporator by adjusting the power of the compressor further includes:
Monitoring the air outlet temperature and the medium temperature;
If the air outlet temperature is within the preset target air outlet temperature fluctuation range and the medium temperature is higher than the preset first high temperature threshold for a preset time period, the control target is changed to the second cooling object;
If the medium temperature is lower than a preset first low temperature threshold, the inlet valve of the first heat exchange medium entering the heat exchanger is closed.

In an embodiment, the processor 1001 may call the vehicle cooling control program stored in the memory 1006 and perform the following operations:
The power of the compressor is adjusted by a preset closed-loop control algorithm. After the step of changing the control target to the second cooling object, the method includes:
The requested power of the compressor before the control target is changed to the second cooling object is used as the initial value of the preset closed-loop control algorithm, and based on the preset closed-loop control algorithm, the step of controlling the medium temperature of the second heat exchange medium by adjusting the power of the compressor is executed.

In an embodiment, the processor 1001 may call the vehicle cooling control program stored in the memory 1006 and perform the following operations:
The step of controlling the medium temperature of the second heat exchange medium by adjusting the power of the compressor further includes:
Monitoring the air outlet temperature and the medium temperature;
If the medium temperature is within the preset medium temperature fluctuation range and the air outlet temperature is higher than the preset second high temperature threshold for a preset time period, the control target is changed to the first cooling target;
If the air outlet temperature is lower than a preset second low temperature threshold, the inlet valve for the first heat exchange medium to enter the evaporator is closed.

In an embodiment, the processor 1001 may call the vehicle cooling control program stored in the memory 1006 and perform the following operations:
The power of the compressor is adjusted by a preset closed-loop control algorithm, and the step of changing the control target to the first cooling target further includes:
The requested power of the compressor before the control target is changed to the first cooling target is used as the initial value of the preset closed-loop control algorithm, and based on the preset closed-loop control algorithm, the step of controlling the air outlet temperature of the evaporator by adjusting the power of the compressor is executed.

In an embodiment, the processor 1001 may call the vehicle cooling control program stored in the memory 1006 and perform the following operations:
Before the step of determining the cooling priority of the first cooling object and the second cooling object, the method includes:
After triggering generation of a dual-cooling mode switching instruction, obtaining a first relevant temperature of the first cooling object, an operating mode of the second cooling object, and a second relevant temperature of the second cooling object; the cooling targets of the vehicle in the dual-cooling mode include the first cooling object and the second cooling object;
Determining a delay time for delaying execution of the dual-cooling mode switching instruction based on the first relevant temperature, the operating mode of the second cooling object, and the second relevant temperature;
After the cooling mode of the vehicle is switched to the single-cooling mode of the first cooling object and maintained for the delay time, or after the single-cooling mode of the first cooling object is maintained for the delay time, the dual-cooling mode switching instruction is executed.

In an embodiment, the processor 1001 may call the vehicle cooling control program stored in the memory 1006 and perform the following operations:
After the step of obtaining the first relevant temperature of the first cooling object, the operating mode of the second cooling object, and the second relevant temperature of the second cooling object, the method includes:
Determining whether the vehicle meets a preset dual-cooling mode delayed switching condition based on the first relevant temperature, the operating mode of the second cooling object, and the second relevant temperature;
If the preset dual-cooling mode delayed switching condition is met, executing the step of determining a delay time for delaying execution of the dual-cooling mode switching instruction based on the first relevant temperature, the operating mode of the second cooling object, and the second relevant temperature;
If the preset dual-cooling mode delayed switching condition is not met, executing the dual-cooling mode switching instruction.

As shown in FIG. 2, the vehicle temperature control system's pipelines include a compressor, condenser, evaporator, heat exchanger, and water pump. Arrows in the figure indicate the flow direction of the media in the pipelines. The evaporator cools a first target, while the heat exchanger cools a second target. The first target is the vehicle's passenger compartment, and the second target is the vehicle's battery. Valves are installed at the inlets of both the evaporator and heat exchanger to restrict the flow of media in the pipelines. For example, if only the evaporator is needed to cool the passenger compartment, the inlet valve of the evaporator is kept open and the inlet valve of the heat exchanger is closed. Conversely, if only the heat exchanger is needed to cool the battery, the inlet valve of the heat exchanger is kept open and the inlet valve of the evaporator is closed. For dual-cooling of the battery and passenger compartment, traditional solutions maintain a constant compressor power and control the passenger compartment and battery temperatures separately by opening and closing the evaporator and inlet valve of the heat exchangers. For example, the evaporator's air outlet temperature and the battery's inlet water temperature are monitored. If the air outlet temperature is less than a preset outlet low temperature, the evaporator's inlet valve is closed. If the air outlet temperature is greater than a preset outlet high temperature, the evaporator's inlet valve is opened. Similarly, if the inlet water temperature is less than a preset inlet low water temperature, the heat exchanger's inlet valve is closed. If the inlet water temperature is greater than a preset inlet high water temperature, the heat exchanger's inlet valve is opened. It is understandable that in actual applications, the above-mentioned traditional solution requires separate on-off control of the two inlet valves. Under separate control, the temperature control system is significantly disturbed, which can easily cause the temperature control system to fluctuate for a long time, affecting the vehicle occupants' riding experience. Therefore, to address the above-mentioned issues, the present application proposes a method for controlling the vehicle cooling that reduces the disturbance caused by the control to the temperature control system, reduces the fluctuation of the passenger compartment temperature and the battery temperature during the temperature control process, and improves the vehicle occupants' riding experience.

With reference to FIG. 8, showing a first embodiment of a method for controlling the vehicle cooling of the present application; the vehicle cooling includes a first cooling object and a second cooling object, and the method for controlling the vehicle cooling includes:
Step T10, determining the cooling priority of the first cooling object and the second cooling object;
It should be noted that in this embodiment, the method described above can be implemented in a vehicle or a temperature control system within the vehicle. The vehicle is typically an electric vehicle, and includes a first cooling target and a second cooling target. The first cooling target can be the passenger compartment, such as the front passenger compartment, the rear passenger compartment, or the entire passenger compartment, and the second cooling target can be the battery. It is understood that significant temperature control disturbances typically occur in dual-cooling mode, so this embodiment primarily uses the dual-cooling scenario as an example.

For example, in the dual-cooling mode, the temperature of the first control object and the second control object needs to be controlled, and the goal of temperature control of the control objects is to control the temperature of both control objects within a set range. Compared with the traditional solution, the present application will first determine the cooling priority of the first cooling object and the second cooling object. The cooling priority represents the cooling object whose temperature is preferentially controlled, which can be the first cooling object or the second cooling object. Normally, the cooling priority is related to the temperature of the cooling object. Generally speaking, the higher the temperature of the cooling object, the higher the corresponding cooling priority. The specific method of determining the cooling priority can be set by the technician according to the safety principle and comfort principle of the vehicle, and will not be repeated here.

Step T20, controlling the temperature of the first cooling object and/or the second cooling object based on the cooling priority.

For example, the control target of the vehicle temperature control system can be determined according to the cooling priority, and the temperature control system will give priority to controlling the temperature of the cooling object with higher priority within the set range. For example, if the priority of the first cooling object is higher than that of the second cooling object, the temperature of the first cooling object will be given priority to be controlled within the set range, that is, the temperature control system will give priority to controlling the cooling power of the system according to the temperature of the first cooling object. In addition, at this time, the temperature control system may not perform temperature control on the second cooling object. Taking FIG. 2 as an example, the temperature control of the second cooling object can be stopped by closing the inlet valve of the heat exchanger. Of course, the temperature of the second cooling object can also be controlled at the same time, that is, the inlet valve of the heat exchanger is kept open, and the temperature of the first cooling object and the second cooling object are controlled at the same time (it is worth noting that the reference object of the cooling power of the temperature control system is the temperature of the first cooling object, that is, the temperature of the second cooling object is also controlled while the temperature of the first cooling object is controlled). Similarly, when the cooling priority of the second cooling object is higher, it should refer to the above process, and it will not be repeated here.

It will be appreciated that in this embodiment, the vehicle determines the cooling priority of the first and second cooling objects; based on this cooling priority, the temperature of the first and/or second cooling objects is controlled. That is, when a vehicle has multiple cooling objects, this embodiment uses the highest-priority cooling object as the basis for control, controlling the temperature of each cooling object. Compared to traditional methods, the present application avoids the technical issue of simultaneously referencing the temperatures of multiple cooling objects, which can easily disrupt the temperature control system and cause large temperature fluctuations in various spaces within the vehicle, thereby improving the vehicle's passenger experience.

In one feasible embodiment, the temperatures of the first cooling object and the second cooling object are controlled by a temperature control system of the vehicle. The temperature control loop of the temperature control system includes a compressor, an evaporator, and a heat exchanger. The evaporator is configured to cool the first cooling object, and the heat exchanger is configured to cool the second cooling object. In the heat exchanger, a first heat exchange medium of the temperature control loop exchanges heat with a second heat exchange medium corresponding to the second cooling object. The step of controlling the temperature of the first cooling object and/or the second cooling object based on the cooling priority includes:
Step T210, selecting the first cooling object or the second cooling object with a higher cooling priority as a control target;
Step T220, when the control target is the first cooling object, controlling the air outlet temperature of the evaporator by adjusting the power of the compressor;
Step T230, when the control target is the second cooling object, controlling the medium temperature of the second heat exchange medium by adjusting the power of the compressor.

It should be noted that the temperature control loop of the vehicle temperature control system of this embodiment may include a compressor, an evaporator, and a heat exchanger, as shown in FIG. 2. The compressor compresses the first heat exchange medium in the temperature control loop; the evaporator is configured to cool the first cooling target (the passenger compartment). For example, the first heat exchange medium evaporates when flowing through the evaporator. Due to the evaporation process, it absorbs heat from the surrounding environment, thereby reducing the air outlet temperature of the evaporator and cooling the passenger compartment. Two media exchange heat in the heat exchanger: the first heat exchange medium in the temperature control loop exchanges heat with the second heat exchange medium in the cooling loop of the second cooling target, i.e., the battery cooling loop. Understandably, in the cooling scenario, the temperature of the first heat exchange medium is lower, so the first heat exchange medium absorbs the heat of the second heat exchange medium, causing the temperature of the second heat exchange medium to drop. After the second heat exchange medium flows through the battery, it cools the battery.

Exemplarily, the one with a higher cooling priority between the first cooling object and the second cooling object is used as the control target. When the control target is the first cooling object, the power (or speed) of the compressor is controlled so that the air outlet temperature of the evaporator approaches the set first target temperature (or can also approach the set first temperature range). Specifically, the first target temperature can be set according to the human body comfort temperature range. When the control target is the second cooling object, the power of the compressor is controlled so that the medium temperature of the second heat exchange medium approaches the second target temperature; the medium temperature is generally the temperature at the inlet of the second heat exchange medium flowing through the battery (or the temperature at the outlet of the second heat exchange medium flowing through the battery), and the second target temperature can be set according to the optimal operating temperature of the battery and the temperature indicated by the medium temperature of the second heat exchange medium. In particular, in the process of controlling the compressor, a proportion integral differential (PID) control algorithm can be used for control, which will not be described in detail here. It can be understood that, compared to conventional temperature regulation by controlling the opening and closing of inlet valves, the present application significantly reduces temperature fluctuations by regulating the temperature through compressor control. For example, based on the example in FIG. 2, if both the evaporator and inlet valve of the heat exchangers are open, the flow rates at both are split into 1. Provided that the conventional regulation solution results in closing the inlet valve of the evaporator, since the evaporator inlet is closed, the flow rate at the inlet valve of the heat exchanger may change to 2 or close to 2. This is equivalent to nearly doubling the cooling efficiency on the side with the inlet valve open, increasing the heat exchanger's cooling efficiency by nearly 100%, thus causing significant disturbances to the vehicle's temperature control system. In contrast, in this embodiment, the compressor output is controlled. For example, provided that the proposed operation results in increasing the compressor speed to reduce the condenser outlet medium temperature by 20%, if this operation is executed based on the air outlet temperature of the target evaporator, this is equivalent to increasing the passenger compartment cooling efficiency by 20% while also increasing the heat exchanger's cooling efficiency by 20%. Therefore, compared with the traditional solution, each temperature adjustment in this embodiment has a smaller impact on the entire vehicle temperature control system. Therefore, the fluctuation of the passenger compartment temperature and the battery temperature can be reduced, and the opening and closing frequency of the inlet valve can also be reduced.

In a feasible embodiment, the step of controlling the air outlet temperature of the evaporator by adjusting the power of the compressor further includes:
Step T211, monitoring the air outlet temperature and the medium temperature;
Step T212, if the air outlet temperature is within the preset target air outlet temperature fluctuation range and the medium temperature is higher than the preset first high temperature threshold for a preset time period, changing the control target to the second cooling object;
Step T213, if the medium temperature is lower than a preset first low temperature threshold, closing the inlet valve of the first heat exchange medium entering the heat exchanger.

For example, while the vehicle controls the air outlet temperature of the evaporator by adjusting the power of the compressor, it also monitors the air outlet temperature and the medium temperature. If the air outlet temperature is monitored to be within the preset target air outlet temperature fluctuation range (that is, the preset target air outlet temperature - T1 ≤ air outlet temperature ≤ preset target air outlet temperature + T1), and the medium temperature is higher than the preset first high temperature threshold for a preset time period, it can be indicated that the temperature of the current first cooling object has been regulated to an appropriate range, so the priority cooling target can be changed to the second cooling object, that is, by adjusting the power of the compressor, the medium temperature of the second heat exchange medium is controlled. If the medium temperature is monitored to be lower than the preset first low temperature threshold, it means that if the second cooling object is continued to be refrigerated, the temperature of the second cooling object, i.e., the battery, may be too low and fall out of the optimal operating temperature range. Therefore, the cooling of the second cooling object can be stopped at this time, and accordingly, the inlet valve of the first heat exchange medium entering the heat exchanger is closed, thereby temporarily stopping to refrigerate the second cooling object and avoiding the waste of cold source.

It can be understood that compared with the traditional solution that only controls the temperature based on valves, the embodiment of the present application will combine the compressor and valves to jointly control the temperature, which increases the temperature control space and precision and reduces the temperature fluctuations in various spaces in the vehicle.

In a feasible embodiment, the power of the compressor is adjusted by a preset closed-loop control algorithm. After the step of changing the control target to the second cooling object, the method includes:
Step T2121, before changing the control target to the second cooling object, configuring the requested power of the compressor as the initial value of the preset closed-loop control algorithm; based on the preset closed-loop control algorithm, executing the step of controlling the medium temperature of the second heat exchange medium by adjusting the power of the compressor.

It should be noted that in this embodiment, the vehicle controls the compressor using a preset closed-loop control algorithm, namely, a PID control algorithm. To ensure smooth control of the compressor after changing the control target, the requested power of the compressor before the control target is changed to the second cooling target is used as the initial value of the preset closed-loop control algorithm. Based on the preset closed-loop control algorithm configured with this initial value, the step of controlling the temperature of the second heat exchange medium by adjusting the compressor power is executed. For example, assuming that a instruction to change the control target to the second cooling target is triggered at time k, and the power requested from the compressor at this time is requested power A. The control target is changed to the second cooling target at time K+1. Assuming that the output requested from the compressor at time K+1 is requested power B, requested power B = requested power A - the proportional component calculated based on the temperature difference at time K+1 + the proportional component calculated based on the temperature difference at time K+1 + the cumulative result calculated from time K to time K+1 based on the temperature difference at time K+1. In other words, requested power A is used as the initial value for calculating requested power B. Assuming that at time K+2, the compressor's requested power is requested power C, then requested power C = requested power A - the proportional component calculated based on the temperature difference at time K+1 + the proportional component calculated based on the temperature difference at time K+2 + the cumulative result calculated between times K and K+2 based on the integral component, with requested power A serving as the initial value for calculating requested power C. It can be understood that by configuring the initial value for the preset closed-loop control algorithm, smoother control of the compressor can be achieved after changing the control target.

In a feasible embodiment, the step of controlling the medium temperature of the second heat exchange medium by adjusting the power of the compressor further includes:
Step T221, monitoring the air outlet temperature and the medium temperature;
Step T222, if the medium temperature is within the preset medium temperature fluctuation range and the air outlet temperature is higher than the preset second high temperature threshold for a preset time period, then changing the control target to the first cooling target;
Step T223, if the air outlet temperature is lower than a preset second low temperature threshold, closing the inlet valve of the first heat exchange medium entering the evaporator.

For example, while the vehicle controls the medium temperature of the second heat exchange medium by adjusting the power of the compressor, it also monitors the air outlet temperature and the medium temperature. If the medium temperature is monitored to be within the preset medium temperature fluctuation range (that is, the preset target medium temperature - T2 ≤ medium temperature ≤ preset target medium temperature + T2), and the air outlet temperature is higher than the preset second high temperature threshold for a preset time period, it indicates that the current second cooling target is basically stable in the appropriate operating temperature range, so the control target can be changed to the second cooling object to reduce the temperature of the second cooling object and improve the comfort of the passenger compartment. In addition, if the air outlet temperature is detected to be lower than the preset second low temperature threshold, it means that continuing to refrigerate may cause the temperature of the first cooling object to be too low, so the inlet valve of the first heat exchange medium entering the evaporator can be closed, thereby suspending the cooling of the first cooling object and avoiding the waste of cold source.

It can be understood that compared with the traditional solution that only controls the temperature based on valves, the embodiment of the present application will combine the compressor and valves to jointly control the temperature, which increases the temperature control space and precision and reduces the fluctuations in the passenger compartment temperature and the battery temperature.

In a feasible embodiment, the power of the compressor is adjusted by a preset closed-loop control algorithm, and the step of changing the control target to the first cooling target further includes:
Step T2221, before changing the control target to the first cooling target, configuring the requested power of the compressor as the initial value of the preset closed-loop control algorithm; based on the preset closed-loop control algorithm, executing the step of controlling the air outlet temperature of the evaporator by adjusting the power of the compressor.

For example, when the control target is changed from the second cooling target to the first cooling target, and the requested power of the compressor is used as the initial value of the preset closed-loop control algorithm before the change of the control target. Then, based on the preset closed-loop control algorithm configured with the initial value, the step of controlling the air outlet temperature of the evaporator by adjusting the power of the compressor is executed. For details, please referring to the above steps which are not repeated here. Similarly, by configuring the initial value for the preset closed-loop control algorithm, the control of the compressor can be smoother after the cooling target is changed.

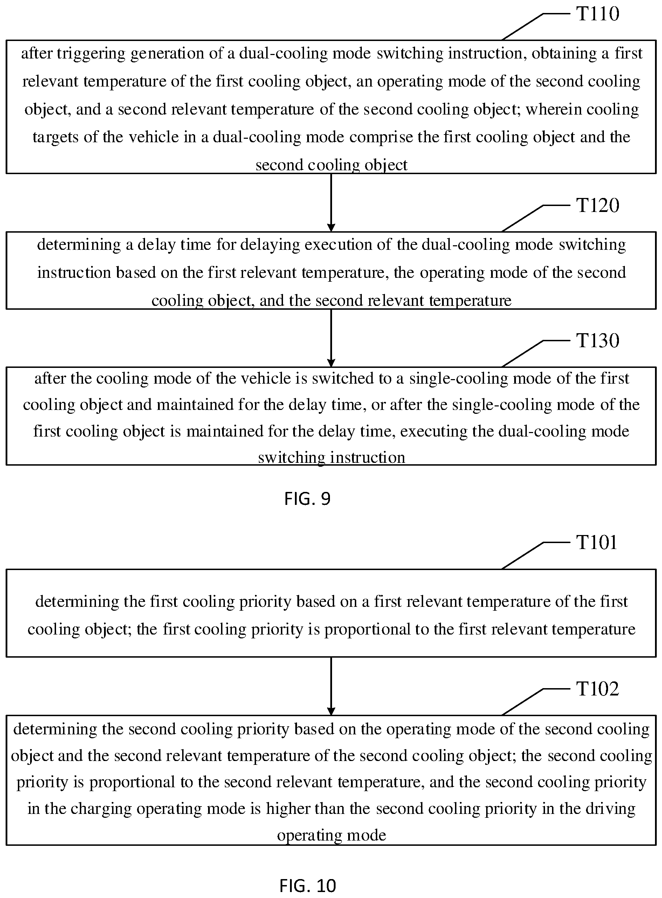

With reference to FIG. 9, FIG. 9 shows a second embodiment based on the first embodiment of the method for controlling the vehicle cooling of the present application. For the same or similar contents as those in the above embodiments, please referring to the above description, they will not be described in detail later.

Before the step of determining the cooling priority of the first cooling object and the second cooling object, the method includes:
Step T110, after triggering the generation of the dual-cooling mode switching instruction, obtaining a first relevant temperature of the first cooling target, an operating mode of the second cooling target, and a second relevant temperature of the second cooling target; the cooling targets of the vehicle in the dual-cooling mode include the first cooling target and the second cooling target;
Step T120, determining a delay time for delaying execution of the dual-cooling mode switching instruction based on the first relevant temperature, the operating mode of the second cooling object, and the second relevant temperature;
Step T130, after switching the cooling mode of the vehicle to the single-cooling mode of the first cooling object and maintaining the delay time, or after maintaining the single-cooling mode of the first cooling object for the delay time, executing the dual-cooling mode switching instruction.

It should be noted that in dual-cooling mode, the first cooling object and the second cooling object will share the cold source in the temperature control system. In order to avoid the problem of insufficient cold source causing a poor passenger experience, the present application sets a delayed switching stage.

For example, the vehicle triggers a dual-cooling switching instruction to switch to the dual-cooling mode. For example, the switching scenarios could be ventilation → passenger compartment + battery dual-cooling; passenger compartment cooling → passenger compartment + battery dual-cooling; battery cooling → passenger compartment + battery dual-cooling, etc. After generating the dual-cooling switching instruction, the vehicle does not switch immediately. Instead, it obtains a first relevant temperature of the first cooling target, the operating mode of the second cooling target, and the second relevant temperature of the second cooling target. The first relevant temperature can be the passenger compartment temperature, and the second relevant temperature can be the maximum temperature of the battery body; the operating mode of the second cooling target can include active driving cooling and charging cooling. Based on the first relevant temperature, the operating mode of the second cooling target, and the second relevant temperature, the vehicle determines a delay time for executing the dual-cooling mode switching instruction. It should be noted that the purpose of delaying the dual-cooling mode switch is to improve passenger comfort while ensuring battery safety. Therefore, the delay time is proportional to the first relevant temperature and inversely proportional to the second relevant temperature. The delay time is longer under battery charging conditions than under battery driving conditions. After determining the delay time, the vehicle's cooling mode is first switched to the single-cooling mode of the first cooling object, and the delay time is maintained in the single-cooling mode for the passenger compartment. Alternatively, if the vehicle's cooling mode itself is the single-cooling mode of the first cooling object, the delay time is maintained in the single-cooling mode of the first cooling object. After the delay time is reached, the dual-cooling switching instruction is executed.

It can be understood that in this embodiment, in order to ensure the comfort of the passenger compartment, a delay time is set before switching to the dual-cooling mode. That is, in the face of a limited cold source, the vehicle will remain in the single-cooling mode of the passenger compartment for an extended period of time before switching to the dual-cooling mode to ensure the comfort of the passenger compartment, and then switch to the dual-cooling mode.

In a feasible embodiment, after the step of obtaining the first relevant temperature of the first cooling object, the operating mode of the second cooling object, and the second relevant temperature of the second cooling object, the method includes:
Step T121, determining whether the vehicle meets a preset dual-cooling mode delayed switching condition based on the first relevant temperature, the operating mode of the battery, and the second relevant temperature;
Step T122, if the preset dual-cooling mode delayed switching condition is met, executing the step of determining a delay time for delaying execution of the dual-cooling mode switching instruction based on the first relevant temperature, the operating mode of the second cooling object, and the second relevant temperature;
Step T123, if the preset dual-cooling mode delayed switching condition is not met, executing the dual-cooling mode switching instruction.

For example, after obtaining the first relevant temperature, the operating mode, and the second relevant temperature, it is first determined whether the vehicle meets the preset dual-cooling mode delayed switching condition based on the first relevant temperature, the battery operating mode, and the second relevant temperature. It is possible that the first cooling target is the passenger compartment, and the second cooling target is the battery. The preset dual-cooling mode delayed switching condition is configured to switch to the dual-cooling mode while ensuring battery safety. The preset dual-cooling mode delayed switching condition can be set by a technician based on battery safety conditions. For example, based on the above example, the preset dual-cooling mode delayed switching condition can be set as:
The battery's operating mode is driving cooling or alternating current (AC) charging cooling;
40°C≤The maximum temperature of the battery body<48°C;
The temperature in the passenger compartment is >28°C.

If the above-mentioned preset dual-cooling mode delayed switching condition is met, the step of determining the delay time for delaying the execution of the dual-cooling mode switching instruction based on the first relevant temperature, the operating mode of the second cooling object, and the second relevant temperature can be executed. Conversely, if the above-mentioned condition is not met, the dual-cooling switching instruction can be executed. The determination of the delay time can be further divided into:
If 40°C < maximum temperature of the battery body ≤ 45°C, the delay time = 13 minutes.
If 45°C < maximum temperature of the battery body < 48°C, the delay time = 8 minutes.
It should be noted that the temperature data and delay time involved above can be set by technical personnel according to needs, and no specific restrictions are made here.

In addition, you can also set the dual-cooling mode immediate cut-off conditions. For example, the dual-cooling mode immediate cut-off conditions may include:
The battery's operating mode is DC charging with active cooling or supercharging with active cooling.

The maximum temperature of the battery body is ≥48°C.

The temperature in the passenger compartment is ≤26°C.

The maximum temperature of the battery body - the minimum temperature of the battery body ≥ 8°C.

That is, if the vehicle meets any one of the conditions, the dual-cooling switching instruction can be executed immediately.

Referring to FIG. 10, a third embodiment is proposed based on the first and second embodiments of the method for controlling the vehicle cooling of the present application. The same or similar contents in this embodiment can be referred to above and will not be described in detail. The cooling priority includes a first cooling priority for a first cooling object and a second cooling priority for a second cooling object. The steps of determining the cooling priority of the first and second cooling objects include:
Step T101, determining the first cooling priority based on a first relevant temperature of the first cooling object; the first cooling priority is proportional to the first relevant temperature;
Step T102, determining the second cooling priority based on the operating mode of the second cooling object and the second relevant temperature of the second cooling object; the second cooling priority is proportional to the second relevant temperature, and the second cooling priority in the charging operating mode is higher than the second cooling priority in the driving operating mode.

For example, the first relevant temperature may also include the vehicle ambient temperature and the evaporator outlet temperature, and in determining the first cooling priority, in addition to the first relevant temperature, the blower air volume and other factors may also be considered. The higher the first relevant temperature, the higher the first cooling priority. The operating modes of the second cooling object may include active driving cooling, AC charging cooling, active DC charging cooling, and active supercharging cooling, and the second cooling priority increases in sequence. The second relevant temperature may be the battery body temperature, and the higher the second relevant temperature, the higher the second cooling priority. The determination of the second cooling priority may also include the battery temperature rise rate and the battery charge and discharge power. Accordingly, if the first cooling priority is greater than the second cooling priority, the first cooling object is selected as the control target. If the second cooling priority is greater than the first cooling priority, the second cooling object is selected as the control target. It is worth noting that when the first cooling priority and the second cooling priority are equal, for example, the first cooling priority and the second cooling priority can be divided into three levels: high, medium, and low. When the first cooling priority and the second cooling priority are both high, the second cooling object can be selected as the control target. If the first cooling priority and the second cooling priority are both medium or low, the first cooling object can be selected as the control target. This will maximize the riding comfort of the vehicle occupants while ensuring battery safety. It is understandable that the determination of the first cooling priority and the second cooling priority can also be specified by technical personnel based on the actual vehicle conditions, which will not be elaborated here.

In addition, an embodiment of the present application also proposes a virtualization device, which includes: a memory, a processor, and a vehicle cooling control program stored on the memory and runnable on the processor. When the vehicle cooling control program is executed by the processor, the steps of the virtualization method described above are implemented.

The specific implementation of the virtualization device of the present application is basically the same as the embodiments of the above-mentioned virtualization method, and will not be repeated here.

In addition, an embodiment of the present application further proposes a readable storage medium, on which a vehicle cooling control program is stored. When the vehicle cooling control program is executed by a processor, the steps of the virtualization method as described above are implemented.

Multi-purpose vehicles (MPVs) are generally equipped with a rear air-conditioning box, which contains an evaporator and an air positive temperature coefficient (PTC). However, due to space constraints and cost considerations, some models do not have temperature sensors installed on the evaporator or air PTC. Temperature sensors are only installed in the rear air-conditioning box's face-blowing air duct. When the rear air-conditioning box's blowing mode is face-blowing or face-blowing-foot-blowing mode, air will flow through the temperature sensor in the face-blowing air duct, allowing closed-loop control of the air PTC based on the temperature measurement value detected by the temperature sensor. However, when the blowing mode is foot-blowing mode, no air will flow through the face-blowing air duct, and the temperature sensor in the face-blowing air duct cannot detect the actual temperature measurement value when the foot-blowing mode is on. Therefore, closed-loop control of the air PTC cannot be achieved, resulting in a large deviation between the actual air outlet temperature and the target air outlet temperature, affecting the comfort of the passenger compartment.

The main purpose of the present application is to provide a method for controlling an air heater in a vehicle, an apparatus, a device and a medium, aiming to solve the technical problem in the related art that when the foot-blowing mode is turned on, the actual temperature measurement value cannot be detected by the temperature sensor in the face-blowing air duct, resulting in the inability to achieve closed-loop control of the air PTC.

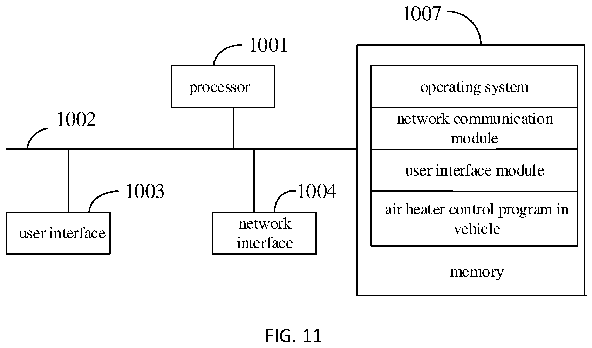

Referring to FIG. 11, FIG. 11 is a schematic structural diagram of a device for controlling the air heater in the vehicle in the hardware operating environment involved in an embodiment of the present application.

As shown in FIG. 11, the device for controlling the air heater in the vehicle may include: a processor 1001, such as a central processing unit (CPU), a communication bus 1002, a user interface 1003, a network interface 1004, and a memory 1007. The communication bus 1002 is configured to implement connection and communication between these components. The user interface 1003 may include a display, an input unit such as a keyboard, and the user interface 1003 may also include a standard wired interface and a wireless interface. The network interface 1004 may include a standard wired interface and a wireless interface (such as a wireless fidelity (Wi-Fi) interface). The memory 1007 may be a high-speed random access memory (RAM) memory, or a stable non-volatile memory (NVM), such as a disk memory. The memory 1007 may also be a storage device independent of the aforementioned processor 1001.

Those skilled in the art will appreciate that the structure shown in FIG. 11 does not limit the device for controlling the air heater in the vehicle, and may include more or fewer components than shown, or combine certain components, or arrange the components differently.

As shown in FIG. 11, the memory 1007 as a storage medium may include an operating system, a network communication module, a user interface module, and an air heater control program in the vehicle.

In the device for controlling the air heater in the vehicle shown in FIG. 11, the network interface 1004 is mainly used for data communication with the network server; the user interface 1003 is mainly used for data interaction with the user; the processor 1001 and the memory 1007 in the device for controlling the air heater in the vehicle of the present application can be set in the device for controlling the air heater in the vehicle, and the device for controlling the air heater in the vehicle calls the air heater control program in the vehicle stored in the memory 1007 through the processor 1001, and executes the method for controlling the air heater in the vehicle provided in the embodiment of the present application.

Based on the above hardware structure, an embodiment of the method for controlling the air heater in the vehicle of the present application is proposed.

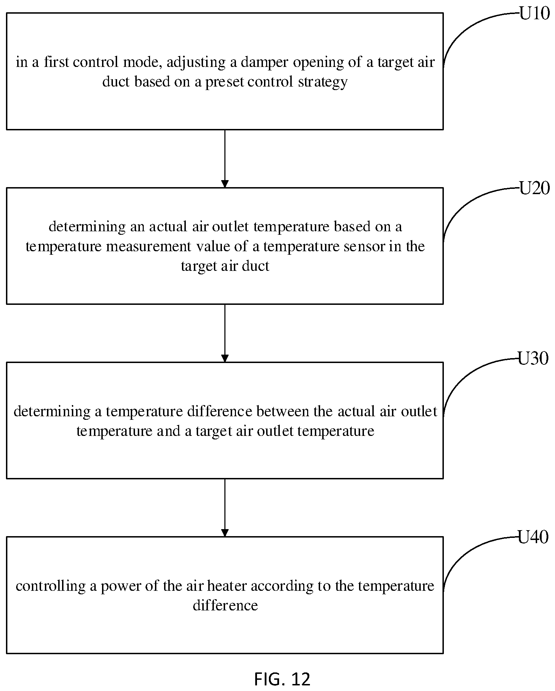

With reference to FIG. 12, FIG. 12 is a flow chart of a first embodiment of a method for controlling an air heater in a vehicle according to the present application.

In this embodiment, the method for controlling the air heater in the vehicle includes the following steps:
Step U10, in the first control mode, adjusting the damper opening of the target air duct based on a preset control strategy.

It should be noted that the execution subject of this embodiment can be a computing service device with data processing, network communication, and program execution capabilities, such as a mobile phone, tablet computer, or personal computer, or an electronic device or device for controlling the air heater in the vehicle capable of executing the aforementioned functions. This embodiment and the following embodiments will be described below using the device for controlling the air heater in the vehicle as an example.

It should be noted that the first control mode refers to the foot-blowing mode in the air-conditioning box blowing mode. The foot-blowing mode refers to the air-conditioning system blowing cold air or hot air to the foot area of the passengers in the vehicle through the foot air outlet; because in the foot-blowing mode, the air heated by the air heater (i.e., air PTC) does not flow through the face-blowing air duct, the temperature sensor located in the blowing air duct cannot detect the actual temperature measurement value when the foot-blowing mode is turned on, resulting in the inability to achieve closed-loop control of the air heater according to the difference between the actual air outlet temperature and the target air outlet temperature (i.e., the power of the air heater cannot be accurately controlled), which will cause the actual air outlet temperature to deviate too much from the target air outlet temperature and affect the comfort of the passenger compartment.

In an embodiment, the air heater is provided in an air-conditioning box; and in the first control mode, adjusting the damper opening of the target air duct based on a preset control strategy includes:
When receiving a heating instruction from a user for the air-conditioning box and the blowing mode is a first control mode, determining the blower air volume and timing time in the first control mode;
Determining a target damper opening according to the blower air volume and the timing time;
Adjusting the damper opening of the target air duct according to the target damper opening.

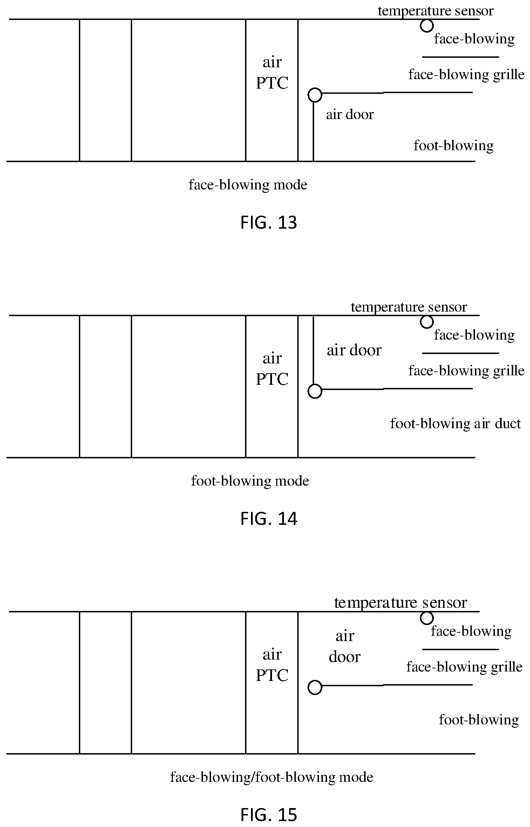

It should be noted that the rear air-conditioning box mainly includes a blower, an evaporator, an air heater, a face-blowing air duct, a foot-blowing air duct, an air outlet grille, a temperature sensor, a face-blowing air door (an air door located at the face-blowing air duct) and a foot-blowing air door (an air door located at the foot-blowing air duct), etc.; the blowing modes include face-blowing mode, foot-blowing mode and face-blowing-foot-blowing mode. Among them, the face-blowing mode refers to the air-conditioning system blowing cold air or hot air to the facial area of the passengers in the vehicle through the face air outlet. As shown in FIG. 13, when the blowing mode is the face-blowing mode, the face-blowing air door is in the open state and the foot-blowing air door is in the closed state. The air heated by the air heater can pass through the face-blowing air duct, and the temperature sensor located in the face-blowing air duct can detect more accurate temperature measurement values; the foot-blowing mode refers to the air-conditioning system blowing cold air or hot air to the facial area of the passengers in the vehicle through the face air outlet. The system blows cold air or hot air to the foot area of the passengers in the vehicle through the foot air outlet, as shown in FIG. 14. When the blowing mode is the foot-blowing mode, the foot-blowing damper is in the open state and the face-blowing is in the closed state. The air heated by the air heater cannot pass through the face-blowing air duct, and the temperature sensor located in the face-blowing air duct cannot detect the accurate temperature measurement value; the face-blowing-foot-blowing mode refers to the air-conditioning system blowing cold air or hot air to the passengers in the vehicle through the face air outlet and the foot air outlet at the same time, as shown in FIG. 15. When the blowing mode is the face-blowing-foot-blowing mode, the face-blowing damper and the foot-blowing damper are both in the open state. At this time, the air heated by the air heater can pass through the face-blowing air duct, and the temperature sensor located in the face-blowing air duct can detect more accurate temperature measurement values.

It should be noted that the blower air volume can not only be configured to maintain a comfortable temperature in the vehicle, but also to speed up the air circulation in the vehicle; the timing time refers to the timing time from the moment of switching from the face-blowing mode or the face-blowing-foot-blowing mode to the foot-blowing mode to the current moment; the air-conditioning box refers to the rear air-conditioning box, and the rear air-conditioning box refers to the apparatus in the vehicle configured to control the rear seat air-conditioning system.

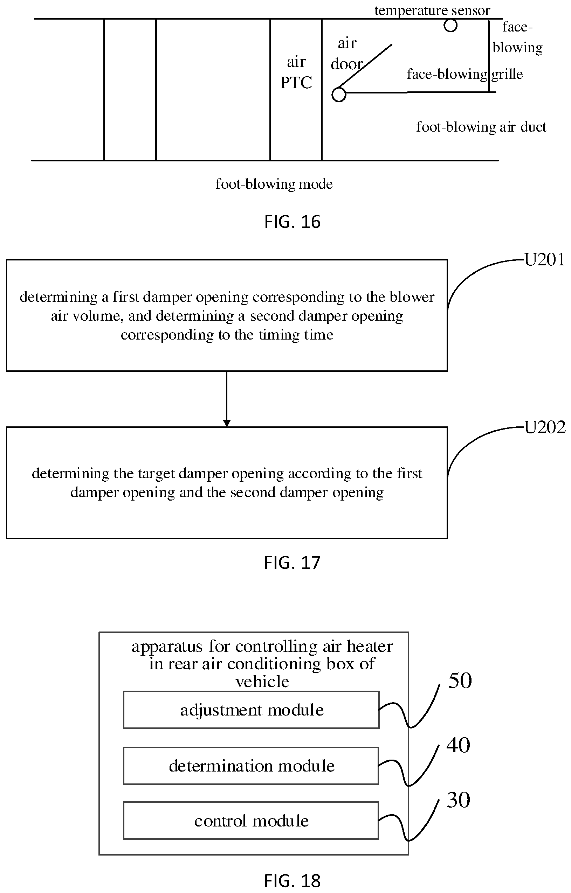

It is understandable that when the rear air-conditioning box has a heating demand (that is, a heating instruction initiated by the user for the air-conditioning box is received), the air heater in the rear air-conditioning box needs to be configured to heat the interior of the vehicle. However, the air heater needs to achieve closed-loop control based on the temperature difference between the actual air outlet temperature and the target air outlet temperature during the heating process. When the blowing mode is the foot-blowing mode, the damper of the face-blowing air duct is in a closed state, and the heated air cannot pass through the damper of the face-blowing air duct and flow through the temperature sensor in the face-blowing air duct, resulting in the temperature sensor being unable to detect the actual air outlet temperature. Therefore, the face-blowing air duct needs to be properly turned on in the foot-blowing mode. The air door of the face-blowing air duct enables the temperature sensor arranged in the face-blowing air duct to detect the actual air outlet temperature (because only after the air door of the face-blowing air duct is opened, the air heated by the air heater can flow from the opened air door through the temperature sensor arranged in the face-blowing air duct). As shown in FIG. 16, in the foot-blowing mode, after the air door at the face-blowing air duct is opened to a certain angle, the temperature sensor located in the face-blowing air duct can detect a more accurate temperature (if the air door of the face-blowing air duct is not opened, the heated air cannot enter the face-blowing air duct, and the temperature measurement value detected by the temperature sensor located in the face-blowing air duct is inaccurate).

It should be noted that the target damper opening refers to the angle at which the damper of the face-blowing air duct actually needs to be opened; when the blower air volume is greater, the flow rate of air from the foot-blowing air duct to the face-blowing air duct is accelerated, so it can be determined that when the blower air volume is greater, the damper angle required to open the face-blowing air duct is smaller; when the mode switching timing time is longer, the amount of air flowing from the foot-blowing air duct through the face-blowing air duct is greater, so it can be determined that when the mode switching timing time is longer, the damper angle required to open the face-blowing air duct is smaller.

In a specific implementation, the target damper opening can be determined by combining the blower air volume and timing time at the current moment. Specifically, a neural network model for predicting the target damper opening can be constructed. The target damper opening can be obtained by inputting the blower air volume and mode switching timing time into the neural network model.

Step U20, determining the actual air outlet temperature based on the temperature measurement value of the temperature sensor in the target air duct.

It should be noted that when the blowing mode is the foot-blowing mode, the face-blowing damper is in a closed state; after the face-blowing damper (i.e., the target damper) needs to be adjusted, the temperature measurement value is detected by the temperature sensor provided in the face-blowing air duct, and then the actual air outlet temperature is determined based on the temperature measurement value and the blower air volume;
Step U30, determining the temperature difference between the actual air outlet temperature and the target air outlet temperature.

It should be noted that the actual air outlet temperature refers to the temperature at the air outlet of the rear air-conditioning box (that is, the temperature actually felt by the passengers in the vehicle), and the target air outlet temperature refers to the air outlet temperature set by the user.

Step U40, controlling the power of the air heater according to the temperature difference.

It should be noted that when the actual air outlet temperature is inconsistent with the target air outlet temperature, it is necessary to adjust the power of the air heater (specifically, it can be adjusted through the power control instruction value). For example, when the target air outlet temperature is higher than the actual air outlet temperature, it is necessary to increase the power of the air heater to increase the heating rate of the air heater, so that the actual air outlet temperature quickly approaches the target air outlet temperature; for example, when the target air outlet temperature is lower than the actual air outlet temperature, it is necessary to reduce the power of the air heater to slow down the heating rate of the air heater, so that the actual air outlet temperature quickly approaches the target air outlet temperature.

In an embodiment, the controlling the power of the air heater according to the temperature difference includes:
Determining a first feedforward control amount according to a temperature sensor value of the vehicle, the blower air volume, and the target air outlet temperature;
Determining a first control parameter according to the temperature difference and the blower air volume;
Controlling the power of the air heater according to the first feedforward control amount and the first control parameter.

It should be noted that the temperature sensor value in the vehicle can be the value measured by the rear temperature sensor in the vehicle. If there is no rear sensor in the vehicle, the temperature sensor value in the vehicle can use the value measured by the front temperature sensor; the first control parameter refers to the P and I control parameters, and the first control parameter can be determined based on the target air outlet temperature, the temperature difference between the actual air outlet temperature, and the mapping relationship between the rear blower air volume and the first control parameter.

In an embodiment, the controlling the power of the air heater according to the temperature difference includes:
Upon receiving an instruction to switch the air-conditioning box to a second control mode, determining a second feedforward control amount according to an air outlet temperature of the target evaporator, the blower air volume, and the target air outlet temperature;
Determining a second control parameter according to the temperature difference and the blower air volume;
Controlling the power of the air heater according to the second feedforward control amount and the second control parameter.

It should be noted that when the air-conditioning box is a partitioned air-conditioning box, it can perform cooling and heating. For example, when the temperature in the vehicle rises, dehumidification is required. At this time, the air-conditioning box needs to perform cooling and heating at the same time (that is, the second control mode); the second control parameter refers to the P and I control parameters. The second control parameter can be determined based on the target air outlet temperature, the temperature difference between the actual air outlet temperature, and the mapping relationship between the rear blower air volume and the second control parameter.

In an embodiment, the method for controlling the air heater in the vehicle further includes:
When the target damper opening is greater than the preset damper opening, the air outlet grille of the target air duct is closed.

It should be noted that the air outlet grille of the target air duct refers to the mesh structure located at the air outlet of the blowing channel in the vehicle air-conditioning system. The air volume of the air outlet can be changed by adjusting the opening or closing of the grille, which can play a role in adjusting the air supply effect.

It is understandable that when the damper opening of the face-blowing air door is too large, a large amount of hot air will flow from the face-blowing air door through the face-blowing air duct and blow toward the facial area of the passengers in the vehicle, which may affect the comfort of the passengers in the vehicle. Therefore, the preset damper opening can be set according to the user's comfort perception. When the damper opening of the face-blowing air door is greater than the preset damper opening, the grille of the face-blowing air duct outlet needs to be closed.

In this embodiment, by setting a preset damper opening, the grille of the face-blowing air duct outlet is closed in time when the target damper opening is greater than the preset damper opening, which can prevent a large amount of hot air from blowing from the face-blowing air duct outlet to the facial area of the passengers in the vehicle, thereby ensuring the comfort of the passengers in the vehicle.

This embodiment adjusts the damper opening of the target air duct based on a preset control strategy in a first control mode; determining the actual air outlet temperature based on the temperature measurement value of the temperature sensor in the target air duct; determining the temperature difference between the actual air outlet temperature and the target air outlet temperature; and controlling the power of the air heater based on the temperature difference. Through the above approach, the damper opening of the target air duct can be adjusted based on the preset control strategy in the first control mode, so that the temperature sensor in the target air duct can detect an accurate temperature measurement value, thereby making the temperature difference between the actual air outlet temperature and the target air outlet temperature more accurately calculated. This allows precise control of the air outlet temperature in different blowing modes without changing the structure of the air-conditioning box.

Referring to FIG. 17, FIG. 17 is a flow chart of a second embodiment of a method for controlling an air heater in a vehicle according to the present application.

Based on the first embodiment, in the method for controlling the air heater in the vehicle of this embodiment, the determining the target damper opening according to the blower air volume and the timing time includes:
Step U201, determining the first damper opening corresponding to the blower air volume, and determining the second damper opening corresponding to the timing time.

It should be noted that since the greater the blower air volume, the faster the air circulation rate, the corresponding damper opening can be determined according to the different blower air volumes; the timing time refers to the timing time from the moment when the other blowing modes are switched to the first control mode (i.e., foot-blowing mode) to the current moment; different timing times correspond to different damper openings.

In a specific implementation, a neural network model for predicting the first damper opening can be constructed, and the first damper opening can be obtained by inputting the blower air volume into the neural network model for predicting the first damper opening; a neural network model for predicting the second damper opening can be constructed, and the mode switching timing time can be input into the neural network model for predicting the second damper opening to obtain the second damper opening.

In an embodiment, the determining the first damper opening corresponding to the blower air volume and determining the second damper opening corresponding to the timing time include:
Determining the first corresponding relationship between the blower air volume and the damper opening;
Constructing a first mapping relationship table according to the first corresponding relationship;
Determining a first damper opening corresponding to the blower air volume from the first mapping relationship table;
Determining a second corresponding relationship between the length of the timing time and the damper opening;
Constructing a second mapping relationship table according to the second corresponding relationship;
Determining the second damper opening corresponding to the timing time from the second mapping relationship table.

It should be noted that when the blower air volume is larger, the flow rate of air from the foot-blowing air duct to the face-blowing air duct is accelerated. Therefore, it can be determined that when the blower air volume is larger, the damper angle required to open the face-blowing air duct is smaller; when the blower air volume is smaller, the damper angle required to open the face-blowing air duct is larger; the first mapping relationship table can be constructed based on multiple experimental results.

In a specific implementation, the first mapping relationship table may be constructed as follows:

| | | | | | |
|---|---|---|---|---|---|
| timing time (s) | 60 | 120 | 180 | 240 | 300 |
| damper opening of face-blowing mode | 35 | 30 | 25 | 20 | 15 |

It should be noted that the longer the timing time is, the more air flows from the foot-blowing air duct through the face-blowing air duct. Therefore, it can be determined that when the mode switching timing time is longer, the smaller the air door angle required to open the face-blowing air duct is, and when the mode switching timing time is shorter, the smaller the air door angle required to open the face-blowing air duct is. The second mapping relationship table can be constructed based on multiple experimental results.

In a specific implementation, the second mapping relationship table is as follows:
Step U202, determining a target damper opening according to the first damper opening and the second damper opening.

In a specific implementation, the largest damper opening between the first damper opening and the second damper opening may be determined as the target damper opening, or the average of the first damper opening and the second damper opening may be determined as the target damper opening.

In a specific implementation, it is also possible to determine whether the first damper opening is greater than the second damper opening; when it is determined that the first damper opening is greater than the second damper opening, the first damper opening is determined as the target damper opening; when it is determined that the first damper opening is not greater than the second damper opening, the second damper opening is determined as the target damper opening; determining the larger damper opening between the first damper opening and the second damper opening as the target damper opening can prevent the temperature sensor in the blowing channel from being affected by the small damper opening of the blowing damper. Specifically, the target damper opening = MAX (first damper opening, second damper opening).

This embodiment determines a first damper opening corresponding to the blower air volume and a second damper opening corresponding to the mode switching timing time; and a target damper opening is determined based on the first damper opening and the second damper opening. This embodiment allows the target damper opening to be determined based on the first damper opening corresponding to the blower air volume and the second damper opening corresponding to the mode switching timing time, making the obtained target damper opening more accurate. This not only prevents the temperature sensor from being affected by an excessively small target damper opening, but also prevents a large amount of hot air from being blown toward the passenger's face through the face-blowing channel and affecting passenger comfort due to an excessively large target damper opening.

In addition, an embodiment of the present application further proposes a storage medium on which an air heater control program in the vehicle is stored. When the air heater control program in the vehicle is executed by a processor, the steps of the method for controlling the air heater in the vehicle described above are implemented.

With reference to FIG. 18, FIG. 18 is a structural block diagram of a first embodiment of a device for controlling the air heater in the vehicle according to the present application.

As shown in FIG. 18, the apparatus for controlling the air heater in the vehicle proposed in the embodiment of the present application includes:
The adjustment module 50, configured to adjust the damper opening of the target air duct based on a preset control strategy in the first control mode.

The determination module 40, configured to determine the actual air outlet temperature according to the temperature measurement value of the temperature sensor in the target air duct.

The determination module 40 is further configured to determine a temperature difference between the actual air outlet temperature and the target air outlet temperature.

The control module 30, configured to control the power of the air heater according to the temperature difference.

It should be understood that the above is only an example and does not constitute any limitation to the technical solution of the present application. In specific applications, those skilled in the art can make settings as needed, and the present application does not impose any restrictions on this.

This embodiment adjusts the damper opening of the target air duct based on a preset control strategy in a first control mode; determining the actual air outlet temperature based on the temperature measurement value of the temperature sensor in the target air duct; determining the temperature difference between the actual air outlet temperature and the target air outlet temperature; and controlling the power of the air heater based on the temperature difference. Through the above approach, the damper opening of the target air duct can be adjusted based on the preset control strategy in the first control mode, so that the temperature sensor in the target air duct can detect an accurate temperature measurement value, thereby making the temperature difference between the actual air outlet temperature and the target air outlet temperature more accurately calculated. This allows precise control of the air outlet temperature in different blowing modes without changing the structure of the air-conditioning box.

In an embodiment, the adjustment module 50 is further configured for:
When receiving a heating instruction from a user for the air-conditioning box and the blowing mode is a first control mode, determining the blower air volume and timing time in the first control mode;
Determining a target damper opening according to the blower air volume and the timing time;
Adjusting the damper opening of the target air duct according to the target damper opening.

In an embodiment, the adjustment module 50 is further configured for:
Determining a first damper opening corresponding to the blower air volume, and determining a second damper opening corresponding to the timing time;
Determining a target damper opening according to the first damper opening and the second damper opening.

In an embodiment, the adjustment module 50 is further configured for:
Determining the first corresponding relationship between the blower air volume and the damper opening;
Constructing a first mapping relationship table according to the first corresponding relationship;
Determining a first damper opening corresponding to the blower air volume from the first mapping relationship table;
Determining a second corresponding relationship between the length of the timing time and the damper opening;
Constructing a second mapping relationship table according to the second corresponding relationship;
Determining the second damper opening corresponding to the timing time from the second mapping relationship table.

In an embodiment, the control module 30 is further configured for:
Determining a first feedforward control amount according to a temperature sensor value of the vehicle, the blower air volume, and the target air outlet temperature;
Determining a first control parameter according to the temperature difference and the blower air volume;
Controlling the power of the air heater according to the first feedforward control amount and the first control parameter.

In an embodiment, the control module 30 is further configured for:
Upon receiving an instruction to switch the air-conditioning box to a second control mode, determining a second feedforward control amount according to an air outlet temperature of the target evaporator , the blower air volume, and the target air outlet temperature;
Determining a second control parameter according to the temperature difference and the blower air volume;
Controlling the power of the air heater according to the second feedforward control amount and the second control parameter.

In an embodiment, the control module 30 is further configured for:
When the target damper opening is greater than the preset damper opening, closing the air outlet grille of the target air duct.

It should be noted that the workflow described above is merely illustrative and does not limit the protection scope of the present application. In actual applications, those skilled in the art can select part or all of it according to actual needs to achieve the purpose of this embodiment scheme, and no restrictions are imposed here.

In addition, for technical details not fully described in this embodiment, please referring to the method for controlling the air heater in the vehicle provided in any embodiment of the present application, which will not be repeated here.

It should be noted that, in this document, the terms "comprises", "includes", or any other variations thereof are intended to encompass non-exclusive inclusion, such that a process, method, article, or system comprising a series of elements includes not only those elements but also other elements not explicitly listed, or elements inherent to such process, method, article, or system. In the absence of further limitations, an element defined by the phrase "comprising a ..." does not exclude the presence of other identical elements in the process, method, article, or system comprising the element.

The serial numbers of the above embodiments of the present application are for description only and do not represent the advantages or disadvantages of the embodiments.

Through the description of the above implementation methods, those skilled in the art can clearly understand that the above-mentioned embodiment methods can be implemented by means of software plus the necessary general hardware platform, and of course can also be implemented by hardware, but in many cases the former is a better implementation method. Based on this understanding, the technical solution of the present application is essentially or the part that contributes to the related art can be embodied in the form of a software product, which is stored in a storage medium (such as ROM/RAM, magnetic disk, optical disk) as described above, and includes a number of instructions for enabling a terminal device (which can be a vehicle, computer, server, or network device, etc.) to execute the methods described in each embodiment of the present application.

The above descriptions are only some embodiments of the present application, and does not limit the patent scope of the present application. All equivalent structural transformations made by configuring the contents of the present application specification and drawings under the technical concept of the present application, or directly/indirectly applied in other related technical fields, are included in the patent protection scope of the present application.

## Claims

1. A method for switching a vehicle cooling mode, **characterized by** comprising:
in response to a cooling mode switching instruction, detecting a pressure state on a high pressure side of a refrigerant in a vehicle cooling system and/or an attempted execution result of the cooling mode switching instruction; and
determining a switching timing based on the pressure state and/or the attempted execution result, and executing the cooling mode switching instruction based on the switching timing.

2. The method for switching the vehicle cooling mode according to claim 1, wherein the determining the switching timing based on the pressure state, and executing the cooling mode switching instruction based on the switching timing comprises:
after detecting that the pressure state is a preset low pressure state, executing the cooling mode switching instruction.

3. The method for switching the vehicle cooling mode according to claim 1, wherein the determining the switching timing based on the pressure state and the attempted execution result, and executing the cooling mode switching instruction based on the switching timing comprises:
in response to that the pressure state is determined to be a preset high pressure state, attempting to execute the cooling mode switching instruction and monitoring system parameters related to the cooling mode switching instruction in the vehicle cooling system; and
in response to that the system parameters do not undergo a preset change, determining the attempted execution result to be an attempted execution failure, and after executing a reset action of the cooling mode switching instruction, and after executing the detecting that the pressure state is the preset low pressure state, executing the cooling mode switching instruction.

4. The method for switching the vehicle cooling mode according to claim 3, wherein the vehicle comprises a first cooling object and a second cooling object; the refrigerant participates in heat exchange in a cooling loop of the vehicle cooling system, and the cooling loop comprises a compressor, an evaporator and a heat exchanger; the evaporator is configured to refrigerate the first cooling object, and the refrigerant enters the evaporator through a first expansion valve; the heat exchanger is configured to refrigerate the second cooling object, and the refrigerant enters the heat exchanger through a second expansion valve; in the heat exchanger, the refrigerant exchanges heat with a heat exchange medium corresponding to the second cooling object, and the heat exchange medium is driven by a water pump.

5. The method for switching the vehicle cooling mode according to claim 4, wherein a mode switching type corresponding to the cooling mode switching instruction is switching from a single-cooling mode of the first cooling object to a dual-cooling mode, and the system parameter is an air outlet temperature of the evaporator and/or a pressure on the high pressure side of the refrigerant;
the attempting to execute the cooling mode switching instruction and monitoring system parameters related to the cooling mode switching instruction in the vehicle cooling system comprises:
maintaining a current power of the compressor, starting the water pump and continuing for a first preset time, and then executing an action of opening the second expansion valve; and
in response to that, after executing the action of opening the second expansion valve and waiting for a second preset time, a change in the air outlet temperature is less than a preset first change threshold, and/or a change in the pressure is less than a second change threshold, determining that the system parameter does not undergo the preset change.

6. The method for switching the vehicle cooling mode according to claim 4, wherein a mode switching type corresponding to the cooling mode switching instruction is switching from a single-cooling mode of the second cooling object to a dual-cooling mode, and the system parameter is a medium temperature of the heat exchange medium and/or a pressure on the high pressure side of the refrigerant;
the attempting to execute the cooling mode switching instruction and monitoring system parameters related to the cooling mode switching instruction in the vehicle cooling system comprises:
maintaining a current power of the compressor and executing an action of opening the first expansion valve; and
in response to that, after executing the action of opening the second expansion valve and waiting for a second preset time, a change in the medium temperature is less than the preset third change threshold, and/or a change in the pressure is less than a second change threshold, determining that the system parameter does not undergo the preset change.

7. The method for switching the vehicle cooling mode according to any one of claims 1 to 6, wherein the executing the cooling mode switching instruction comprises:
determining an initial value of a control algorithm for controlling the compressor based on a requested power of the compressor in the vehicle cooling system and a compensation value of the cooling object before executing the cooling mode switching instruction, and controlling a power of the compressor based on the control algorithm.

8. A method for controlling a vehicle cooling, wherein the vehicle comprises a first cooling object and a second cooling object, **characterized in that** the method for controlling the vehicle cooling comprises:
determining a cooling priority between the first cooling object and the second cooling object; and
controlling a temperature of the first cooling object and/or the second cooling object based on the cooling priority.

9. The method for controlling the vehicle cooling according to claim 8, wherein temperatures of the first cooling object and the second cooling object are controlled by a temperature control system of the vehicle, and a temperature control loop of the temperature control system comprises a compressor, an evaporator, and a heat exchanger; the evaporator is configured to cool the first cooling object, and the heat exchanger is configured to cool the second cooling object; a first heat exchange medium of the temperature control loop exchanges heat with a second heat exchange medium corresponding to the second cooling object in the heat exchanger; the controlling the temperature of the first cooling object and/or the second cooling object based on the cooling priority comprises:
selecting the one with a higher cooling priority between the first cooling object and the second cooling object as a control target;
in response to that the control target is the first cooling object, controlling an air outlet temperature of the evaporator by adjusting a power of the compressor; and
in response to that the control target is the second cooling object, controlling a medium temperature of the second heat exchange medium by adjusting the power of the compressor.

10. The method for controlling the vehicle cooling according to claim 9, wherein the controlling the air outlet temperature of the evaporator by adjusting the power of the compressor further comprises:
monitoring the air outlet temperature and the medium temperature;
in response to that the air outlet temperature is within a preset target air outlet temperature fluctuation range and the medium temperature is higher than a preset first high temperature threshold for a preset time period, changing the control target to the second cooling object; and
in response to that the medium temperature is lower than a preset first low temperature threshold, closing an inlet valve for the first heat exchange medium entering the heat exchanger.

11. The method for controlling the vehicle cooling according to claim 10, wherein the power of the compressor is adjusted by a preset closed-loop control algorithm; the changing the control target to the second cooling object further comprises:
configuring a requested power of the compressor as an initial value of the preset closed-loop control algorithm before the control target is changed to the second cooling object; based on the preset closed-loop control algorithm, executing the controlling the medium temperature of the second heat exchange medium by adjusting the power of the compressor.

12. The method for controlling the vehicle cooling according to claim 9, wherein the controlling the medium temperature of the second heat exchange medium by adjusting the power of the compressor further comprises:
monitoring the air outlet temperature and the medium temperature;
in response to that the medium temperature is within a preset medium temperature fluctuation range and the air outlet temperature is higher than a preset second high temperature threshold for a preset time period, changing the control target to the first cooling target; and
in response to that the air outlet temperature is lower than a preset second low temperature threshold, closing an inlet valve for the first heat exchange medium entering the evaporator.

13. The method for controlling the vehicle cooling according to claim 12, wherein the power of the compressor is adjusted by a preset closed-loop control algorithm; the changing the control target to the first cooling object further comprises:
configuring a requested power of the compressor as an initial value of the preset closed-loop control algorithm before the control target is changed to the first cooling target; based on the preset closed-loop control algorithm, executing the controlling the air outlet temperature of the evaporator by adjusting the power of the compressor.

14. The method for controlling the vehicle cooling according to claim 8, wherein before the determining the cooling priority of the first cooling object and the second cooling object, the method further comprises:
after triggering generation of a dual-cooling mode switching instruction, obtaining a first relevant temperature of the first cooling object, an operating mode of the second cooling object, and a second relevant temperature of the second cooling object; wherein cooling targets of the vehicle in a dual-cooling mode comprise the first cooling object and the second cooling object;
determining a delay time for delaying execution of the dual-cooling mode switching instruction based on the first relevant temperature, the operating mode of the second cooling object, and the second relevant temperature; and
after the cooling mode of the vehicle is switched to a single-cooling mode of the first cooling object and maintained for the delay time, or after the single-cooling mode of the first cooling object is maintained for the delay time, executing the dual-cooling mode switching instruction.

15. The method for controlling the vehicle cooling according to claim 14, wherein, after the obtaining the first relevant temperature of the first cooling object, the operating mode of the second cooling object, and the second relevant temperature of the second cooling object, the method further comprises:
determining whether the vehicle meets a preset dual-cooling mode delayed switching condition based on the first relevant temperature, the operating mode of the second cooling object, and the second relevant temperature;
in response to that the preset dual-cooling mode delayed switching condition is met, executing the determining the delay time for delaying execution of the dual-cooling mode switching instruction based on the first relevant temperature, the operating mode of the second cooling object, and the second relevant temperature; and
in response to that the preset dual-cooling mode delayed switching condition is not met, executing the dual-cooling mode switching instruction.

16. A method for controlling an air heater in a vehicle, **characterized by** comprising:
in a first control mode, adjusting a damper opening of a target air duct based on a preset control strategy;
determining an actual air outlet temperature based on a temperature measurement value of a temperature sensor in the target air duct;
determining a temperature difference between the actual air outlet temperature and a target air outlet temperature; and
controlling a power of the air heater according to the temperature difference.

17. The method according to claim 16, wherein the air heater is provided in an air-conditioning box; the in the first control mode, adjusting the damper opening of the target air duct based on the preset control strategy comprises:
in response to that a heating instruction is received for the air-conditioning box and a blowing mode is the first control mode, determining a blower air volume and a timing time in the first control mode;
determining a target damper opening according to the blower air volume and the timing time; and
adjusting the damper opening of the target air duct according to the target damper opening.

18. The method according to claim 17, wherein the determining the target damper opening according to the blower air volume and the timing time comprises:
determining a first damper opening corresponding to the blower air volume, and determining a second damper opening corresponding to the timing time; and
determining the target damper opening according to the first damper opening and the second damper opening.

19. The method according to claim 17, wherein the determining the first damper opening corresponding to the blower air volume and determining the second damper opening corresponding to the timing time comprises:
determining a first corresponding relationship between the blower air volume and the damper opening;
constructing a first mapping relationship table according to the first corresponding relationship;
determining a first damper opening corresponding to the blower air volume from the first mapping relationship table;
determining a second corresponding relationship between a length of the timing time and the damper opening;
constructing a second mapping relationship table according to the second corresponding relationship; and
determining a second damper opening corresponding to the timing time from the second mapping relationship table.

20. The method according to claim 17, wherein the controlling the power of the air heater according to the temperature difference comprises:
determining a first feedforward control amount according to a temperature sensor value of the vehicle, the blower air volume, and the target air outlet temperature;
determining a first control parameter according to the temperature difference and the blower air volume; and
controlling the power of the air heater according to the first feedforward control amount and the first control parameter.

21. The method according to claim 17, wherein the controlling the power of the air heater according to the temperature difference comprises:
in response to that an instruction to switch the air-conditioning box to a second control mode is received, determining a second feedforward control amount according to an air outlet temperature of a target evaporator, the blower air volume, and the target air outlet temperature;
determining a second control parameter according to the temperature difference and the blower air volume; and
controlling the power of the air heater according to the second feedforward control amount and the second control parameter.

22. The method according to claim 17, further comprising:
in response to that the target damper opening is greater than the preset damper opening, closing an air outlet grille of the target air duct.

23. An apparatus for switching a vehicle cooling mode, **characterized by** comprising:
a detection module, configured to detect, in response to a cooling mode switching instruction, a pressure state of a high pressure side of a refrigerant in a vehicle cooling system and/or an attempted execution result of the cooling mode switching instruction; and
a switching module, configured to determine a switching timing based on the pressure state and/or the attempted execution result, and execute the cooling mode switching instruction based on the switching timing.

24. A device for switching a vehicle cooling mode, **characterized by** comprising: a memory, a processor, and a vehicle cooling mode switching program stored in the memory and executable on the processor, wherein when the vehicle cooling mode switching program is executed by the processor, the steps of the method for switching the vehicle cooling mode according to any one of claims 1 to 7 are implemented.

25. A readable storage medium, **characterized in that** the readable storage medium is a computer-readable storage medium, and a vehicle cooling mode switching program is stored on the readable storage medium; when the vehicle cooling mode switching program is executed by a processor, the steps of the method for switching the vehicle cooling mode according to any one of claims 1 to 7 are implemented.

26. A device for controlling a vehicle cooling, **characterized by** comprising: a memory, a processor, and a vehicle cooling control program stored in the memory and executable on the processor, wherein when the vehicle cooling control program is executed by the processor, the steps of the method for controlling the vehicle cooling according to any one of claims 8 to 15 are implemented.

27. A readable storage medium, **characterized in that** the readable storage medium is a computer-readable storage medium, and a vehicle cooling control program is stored on the readable storage medium; when the vehicle cooling control program is executed by a processor, the steps of the method for controlling the vehicle cooling according to any one of claims 8 to 15 are implemented.

28. An apparatus for controlling an air heater in a vehicle, **characterized by** comprising:
an adjustment module, configured to adjust a damper opening of a target air duct based on a preset control strategy in a first control mode;
a determination module, configured to determine an actual air outlet temperature based on a temperature measurement value of a temperature sensor in the target air duct, and further configured to determine a temperature difference between the actual air outlet temperature and a target air outlet temperature; and
a control module, configured to control a power of the air heater according to the temperature difference.

29. A device for controlling an air heater in a vehicle, **characterized by** comprising: a memory, a processor, and an air heater control program in the vehicle stored in the memory and executable on the processor, wherein the air heater control program in the vehicle is configured to implement the steps of the method for controlling the air heater in the vehicle according to any one of claims 16 to 22.

30. A storage medium, **characterized in that** an air heater control program in the vehicle is stored on the storage medium, and when the air heater control program in the vehicle is executed by a processor, the steps of the method for controlling the air heater in the vehicle according to any one of claims 16 to 22 are implemented.
